# EUROPEAN PATENT APPLICATION

(11) **EP 4 656 667 A1**
(43) Date of publication of application: **03.12.2025**
(21) Application number: 25177500.3
(22) Date of filing: 20.05.2025
(51) Int. Cl.: C08G 65/00, C08G 65/336, C08L 71/02

(54) **CURABLE COMPOSITION**

(30) Priority: 28.05.2024 JP 2024086352
(71) Applicant: Shin-Etsu Chemical Co., Ltd., Tokyo 100-0005 (JP)
(72) Inventor: ASAHI, Tomoyuki, Annaka-shi, 3790224 (JP)
(74) Representative: Angerhausen, Christoph

(57) **Abstract**

A curable composition includes a component (A1) which is a compound that contains at least one alkenyl group at each of both terminals of a molecular chain and contains a divalent perfluoro(poly)ether residue in a main chain, a component (A2) which is a compound that contains at least one alkenyl group only at one terminal of a molecular chain and contains a perfluoro(poly)ether residue in a main chain, in which the curable composition contains the component (A2) in an amount as determined such that a total amount of the component (A2) is 0.10% by mole or greater and 50% by mole or less with respect to a total amount of the components (A1) and (A2), a component (B) which is a fluorine-modified organic silicon compound that has two or more hydrogen atoms bonded to silicon atoms in one molecule, a component (C) which is a hydrosilylation reaction catalyst, and a component (D) which is a reinforcing filler.

## Description

### BACKGROUND OF THE INVENTION

### Field of the Invention

The present invention relates to a perfluoro(poly)ether compound-containing curable composition.

### Background art

JP-A-2002-167502 discloses, as a curable composition having excellent heat resistance, chemical resistance, solvent resistance, low-temperature characteristics, and the like, a curable fluoropolyether-based rubber composition formed of a linear fluoropolyether compound that contains at least two alkenyl groups in a molecule and has a perfluoroalkyl ether structure in a main chain.

### SUMMARY OF THE INVENTION

The curable fluoropolyether-based rubber composition described in JP-A-2002-167502 is capable of providing a rubber cured product with excellent functions, but is required to have higher elongation properties. For example, a rubber cured product is attached to a rod or a spool in some cases usually in a state where the rubber cured product is stretched, but the rubber cured product may be broken or twisted when the rubber cured product has a low elongation at break (elongation properties), and as a result, attachment failure may occur in some cases. Accordingly, it is important for a cured product to have a high elongation at break.

Therefore, it is an object of the present invention to provide a thermosetting perfluoro(poly)ether compound-containing composition that is capable of providing a cured product (perfluoro(poly)ether rubber cured product) having excellent heat resistance, chemical resistance, solvent resistance, low-temperature properties, and the like and forms a cured product with excellent elongation properties.

As a result of intensive research repeatedly conducted by the present inventor in order to achieve the above-described object, it has been found that the object can be achieved by using the following composition, thereby completing the present invention.
<1> A curable composition including: a component (A1) which is a compound that contains at least one alkenyl group at each of both terminals of a molecular chain and contains a divalent perfluoro(poly)ether residue in a main chain; a component (A2) which is a compound that contains at least one alkenyl group only at one terminal of a molecular chain and contains a perfluoro(poly)ether residue in a main chain, in which the curable composition contains the component (A2) in an amount as determined such that a total amount of the component (A2) is 0.10% by mole or greater and 50% by mole or less with respect to a total amount of the components (A1) and (A2); a component (B) which is a fluorine-modified organic silicon compound that has two or more hydrogen atoms bonded to silicon atoms in one molecule; a component (C) which is a hydrosilylation reaction catalyst; and a component (D) which is a reinforcing filler.
<2> The curable composition according to <1>,
   in which the component (A1) is represented by General Formula (1) defined as

      Rf¹[-U-Z(-Y-X)_{β}]₂ (1);

      and
   in which the component (A2) is represented by General Formula (2) defined as

      Rf²-U-Z(-Y-X)_{β} (2)

      wherein, in the formulae, Rf¹ represents a divalent perfluoro(poly)ether group, Rf² represents a monovalent perfluoro(poly)ether group, U's each independently represent a single bond, a carbonyl bond, or a divalent organic group, Z's each independently represent a single bond, a nitrogen atom, a silicon atom, a carbon atom, a phosphorus atom, or a tri- to octavalent organic group, Y's each independently represent a single bond or a divalent organic group, X's each independently represent an alkenyl group, and β represents an integer of 1 to 7, where β represents 2 or greater in a case where Z does not represent a single bond, and U and Z do not represent a single bond at the same time.
<3> The curable composition according to <1> or <2>, in which the total amount of the component (A2) is 0.50% by mole or greater and 40% by mole or less with respect to the total amount of the components (A1) and (A2).
<4> The curable composition according to any one of <1> to <3>, in which the total amount of the components (A1) and (A2) is 100 parts by mass, an amount of the component (B) is as determined such that an amount of the hydrogen atoms (SiH group) bonded to the silicon atoms in the component (B) is 0.5 to 5 moles with respect to 1 mole of the alkenyl group in the components (A1) and (A2), an amount of the component (C) is set to a catalyst amount, and an amount of the component (D) is 10 to 40 parts by mass.
<5> The curable composition according to any one of <1> to <4>, further including: a component (E) which is a hydrosilylation reaction control agent.
<6> The curable composition according to any one of <1> to <5>, in which the curable composition is used for a liquid injection molding system.
<7> An article produced by curing the curable composition according to any one of <1> to <6>.

According to the present invention, it is possible to provide a thermosetting perfluoro(poly)ether compound-containing composition which has excellent heat resistance, chemical resistance, solvent resistance, low-temperature properties, and the like specific to a perfluoro(poly)ether rubber cured product and which forms a cured product having excellent elongation properties.

### DETAILED DESCRIPTION OF THE INVENTION

### Component (A1)

A component (A1) is a component that forms a main agent (base polymer) of a curable composition together with a component (A2), and is a compound that contains at least one alkenyl group at each of both terminals and a divalent perfluoro(poly)ether residue in the main chain.

In the present invention, the perfluoro(poly)ether residue denotes a group obtained by removing fluorine atoms at the terminals of perfluoro(poly)ether.

As the alkenyl group contained in the component (A1), an alkenyl group having 2 to 14 carbon atoms or particularly an alkenyl group having 2 to 6 carbon atoms and a CH₂=CH-structure is preferable, and examples thereof include a vinyl group, an allyl group, a propenyl group, an isopropenyl group, a butenyl group, and a hexenyl group. Among these, a vinyl group or an allyl group is particularly preferable.

The component (A1) contains at least two (for example, 2 to 14) alkenyl groups, preferably 2 to 6 alkenyl groups, and particularly preferably two alkenyl groups in one molecule and contains a divalent perfluoro(poly)ether residue in the molecular chain, specifically, in the main chain.

The content of the alkenyl group in the component (A1) is preferably in a range of 0.005 to 0.3 mol/100 g and more preferably in a range of 0.007 to 0.2 mol/100 g. In a case where the content of the alkenyl group is 0.005 mol/100 g or greater, the degree of crosslinking of the composition is sufficient, and thus there is no risk of occurrence of curing failure. Meanwhile, in a case where the content of the alkenyl group is 0.3 mol/100 g or less, there is no risk of degradation of mechanical properties of a cured product (perfluoro(poly)ether rubber cured product) obtained by curing the composition. Further, the content of the alkenyl group in the component (A1) can be calculated from ¹H-NMR measurement.

The kinetic viscosity of the component (A1) at 25°C is preferably in a range of 25 to 1,000,000 mm²/s and more preferably in a range of 100 to 100,000 mm²/s. In a case where the kinetic viscosity thereof is in a range of 25 mm²/s to 1,000,000 mm²/s, a perfluoro(poly)ether compound-containing curable composition with satisfactory handleability can be obtained.

The component (A1) may be used alone or in combination of two or more kinds thereof.

A compound represented by General Formula (1) is preferable as such a component (A1).

Rf¹[-U-Z(-Y-X)_{β}]₂ (1)

In the formula, Rf¹ represents a divalent perfluoro(poly)ether residue, U's each independently represent a single bond, a carbonyl bond, or a divalent organic group, Z's each independently represent a single bond, a nitrogen atom, a silicon atom, a carbon atom, a phosphorus atom, or a tri- to octavalent organic group, Y's each independently represent a single bond or a divalent organic group, X's each independently represent an alkenyl group, and β represents an integer of 1 to 7. Here, U and Z do not represent a single bond at the same time.

In Formula (1), Rf¹ represents a divalent perfluoro(poly)ether residue. The divalent perfluoro(poly)ether residue has at least one and preferably two or more perfluorooxyalkylene units. The divalent perfluoro(poly)ether residue may also have a perfluoroalkylene unit in addition to the perfluorooxyalkylene unit. The position of the perfluoroalkylene unit may be any of a middle position or a terminal position in the divalent perfluoro(poly)ether residue.

CₙF₂ₙ (n represents an integer of 1 to 6 and preferably an integer of 2 to 4) is preferable as the perfluoroalkylene unit, and examples thereof are shown below.

-CF₂-

-CF₂CF₂-

-CF(CF₃)-

-CF₂CF₂CF₂-

-CF₂CF₂CF₂CF₂-

-CF₂CF₂CF₂CF₂CF₂-

-CF₂CF₂CF₂CF₂CF₂CF₂-

Further, as the divalent perfluoro(poly)ether residue, a group having a repeating unit (perfluorooxyalkylene unit) represented by Formula -CₐF₂ₐO- (in the formula, a represents an integer of 1 to 6) may be used, and examples thereof include groups represented by General Formulae (3-1) and (3-2):

-(CₐF₂ₐO)_{b}- (3-1);

and

-(CₐF₂ₐO)_{b}(CₙF₂ₙ)_{c}- (3-2),

wherein, in the formulae, a represents an integer of 1 to 6, b represents an integer of 1 to 300, preferably an integer of 1 to 200, and still more preferably an integer of 5 to 200, c represents an integer of 1 to 10 and preferably an integer of 1 to 6, and n has the same definition as described above.

Further, the repeating units in the parentheses with b and c may be randomly bonded to each other. In a case where b or c represents 2 or greater, a in CₐF₂ₐO in the parentheses with b and n in CₙF₂ₙ in the parentheses with c are independent from each other.

Examples of the repeating unit represented by -CₐF₂ₐO- include units represented by the following formulae.

-CF₂O-

-CF₂CF₂O-

-CF₂CF₂CF₂O-

-CF(CF₃)CF₂O-

-CF(CF₃)OCF₂-

-CF₂OCF(CF₃)-

-CF₂CF₂CF₂CF₂O-

-CF₂CF₂CF₂CF₂CF₂O-

-CF₂CF₂CF₂CF₂CF₂CF₂O-

-C(CF₃)₂O-

Among these, the repeating units represented by the following formulae are particularly suitable.

-CF₂O-

-CF₂CF₂O-

-CF₂CF₂CF₂O-

-CF(CF₃)CF₂O-

-CF(CF₃)OCF₂-

-CF₂OCF(CF₃)-

In addition, the divalent perfluoro(poly)ether residue may be formed of one kind or a combination of two or more kinds of the above-described repeating units.

It is preferable that Rf¹ represent, for example, a group represented by any of the following formulae.

-CF₂O(CF₂O)_{p'}CF₂-

-CF₂O(CF₂O)_{p'}(CF₂CF₂O)_{q'}CF₂-

-CF₂O(CF₂O)_{p'}(CF₂CF₂O)_{q'}(CF₂CF₂CF₂O)_{r'}CF₂-

-CF₂O(CF₂O)_{p'}(CF₂CF₂O)_{q'}(CF₂CF₂CF₂CF₂O)_{s'}CF₂-

-CF₂O(CF₂O)_{p'}(CF₂CF₂O)_{q'}(CF₂CF₂CF₂O)_{r'}(CF₂CF₂CF₂CF₂O)_{s'}CF₂-

-CF₂CF₂CF₂O(CF₂CF₂O)_{q'}(CF₂CF₂CF₂CF₂O)_{s'}CF₂CF₂CF₂-

-CF₂CF₂O(CF₂CF₂CF₂O)_{r'}CF₂CF₂-

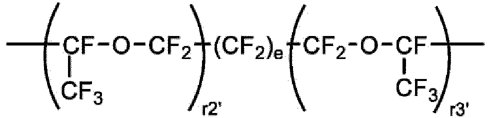

In the formulae, p', q', r', s', r2', and r3' each represent an integer of 1 or greater, and the sum of p', q', r', s', r2', and r3' is 2 to 300 in each formula (each group). e represents an integer of 0 to 6. Further, the repeating units in the parentheses with p', q', r', and s' may be randomly bonded to each other.

In Formula (1), U's each independently represent a single bond, a carbonyl bond, or a divalent organic group. The divalent organic group is preferably a substituted or unsubstituted divalent hydrocarbon group having 2 to 12 carbon atoms, and examples thereof include an alkylene group such as an ethylene group, a propylene group (a trimethylene group or a methylethylene group), a butylene group (a tetramethylene group or a methylpropylene group), a hexamethylene group, or an octamethylene group, an arylene group such as a phenylene group, and combinations of two or more kinds of these groups (such as an alkylene-arylene group). The divalent hydrocarbon group having 2 to 12 carbon atoms may have one or two or more kinds of structures selected from the group consisting of an amide bond, an ether bond, a carbonyl bond, an ester bond, a diorganosilylene group such as a dimethylsilylene group, and a group represented by -Si[OH][(CH₂)_{f}Si(CH₃)₃]- (f represents an integer of 2 to 4), and may be a group in which some or all hydrogen atoms bonded to carbon atoms are substituted with halogen atoms such as fluorine and iodine.

In addition, the number of carbon atoms in the divalent hydrocarbon group having 2 to 12 carbon atoms, which is preferable as the divalent organic group, is obtained by counting the number of carbon atoms in an unsubstituted divalent hydrocarbon group, and for example, in a case where the above-described structures such as a dimethylsilylene group are interposed in the divalent hydrocarbon group, the number of carbon atoms in the structure is not counted.

Examples of U include groups represented by the following formulae. Further, it is preferable that the bonding site on the left side be bonded to Rf¹ and that the bonding site on the right side be bonded to Z in each of the following structures.

-(CH₂)ᵤ-O-(CH₂)ᵥ-

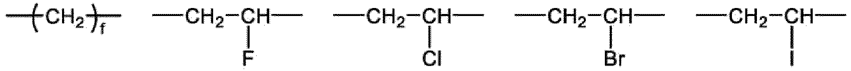

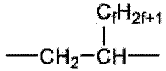

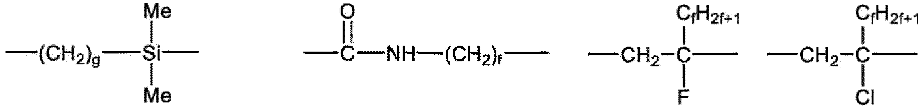

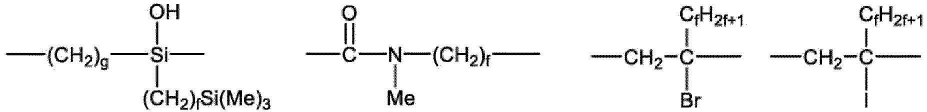

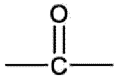

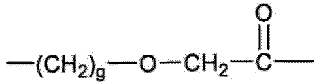

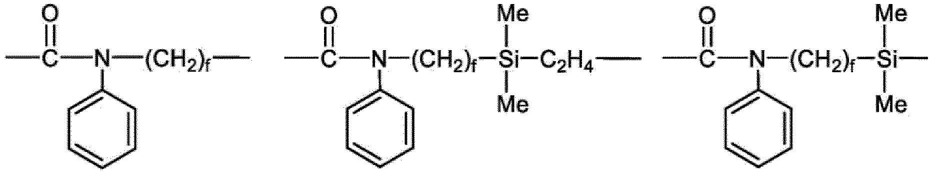

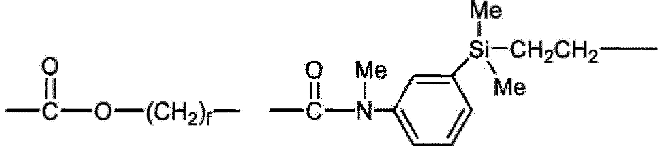

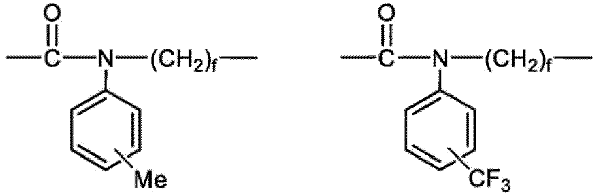

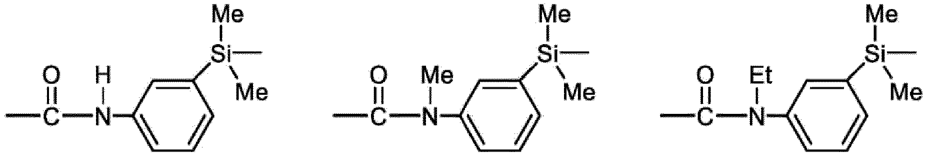

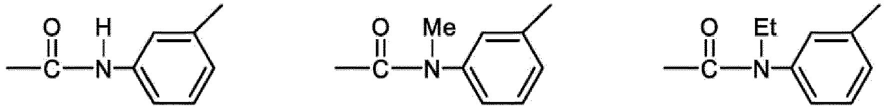

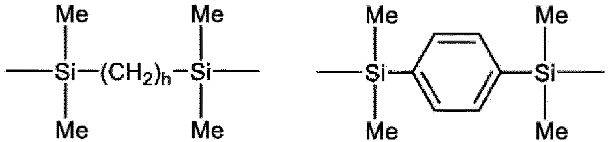

In the formulae, f represents an integer of 2 to 4, h represents an integer of 2 to 6 and preferably an integer of 2 to 4, u and v each independently represent an integer of 1 to 4, g represents an integer of 2 to 4, and Me represents a methyl group.

In Formula (1), Z's each independently represent a single bond, a nitrogen atom, a silicon atom, a carbon atoms, a phosphorus atom, or a tri- to octavalent organic group, and the tri- to octavalent (the above-described (β + 1)-valent) organic group may have at least one kind selected from a nitrogen atom, an oxygen atom, a silicon atom, a carbon atom, and a phosphorus atom. Specifically, Z represents a single bond, a group selected from a trivalent group represented by -N=, a trivalent group represented by -P=, a trivalent group represented by -PO=, a trivalent group represented by -(R¹)C=, a trivalent group represented by -(R³)Si=, a tetravalent group represented by -C≡, a tetravalent group represented by -O-C≡, and a tetravalent group represented by -Si≡, or a tri- to octavalent siloxane residue. In addition, in a case where Z does not represent a single bond, β represents 2 or greater, and U and Z do not represent a single bond at the same time.

In the description above, it is preferable that R¹'s each independently represent an alkyl group having 1 to 3 carbon atoms, a hydroxyl group, a group having a repeating unit of an oxyalkylene group having 1 to 3 carbon atoms, which may have a diorganosiloxane structure having 2 to 51 silicon atoms, or a silylether group represented by R²₃SiO-, and R²'s each independently represent a hydrogen atom and preferably an alkyl group having 1 to 3 carbon atoms, an aryl group such as a phenyl group, or an alkoxy group having 1 to 3 carbon atoms. It is preferable that R³'s each independently represent an alkyl group having 1 to 3 carbon atoms, an alkenyl group having 2 or 3 carbon atoms, an alkoxy group having 1 to 3 carbon atoms, a hydroxyl group, or a chloro group. In a case where Z represents a siloxane residue, it is preferable that the siloxane residue have a linear, branched, or cyclic organopolysiloxane structure having 2 to 51 silicon atoms, preferably 2 to 13 silicon atoms, more preferably 2 to 11 silicon atoms, and still more preferably 2 to 5 silicon atoms. The organopolysiloxane may contain a methyl group, ethyl group, propyl group, or butyl group having 1 to 8 carbon atoms and preferably 1 to 4 carbon atoms, an unsubstituted or fluorine-substituted alkyl group such as C₃F₇-C₃H₆-, or a phenyl group. Further, the organopolysiloxane may further have a silalkylene structure in which two silicon atoms are bonded to each other via an alkylene group, that is, Si-(CH₂)ₕ-Si. In the formula, h represents an integer of 2 to 6 and preferably an integer of 2 to 4.

Examples of Z include groups represented by the following formulae. In each of the following structures, it is preferable that the bonding site on the left side be bonded to U and that other bonding sites be bonded to Y.

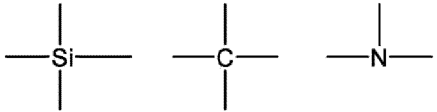

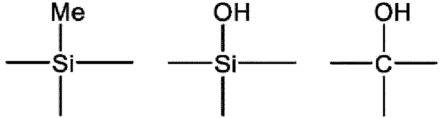

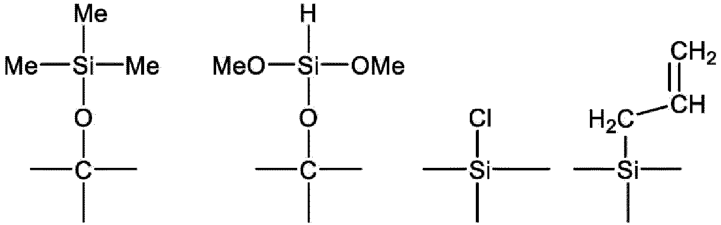

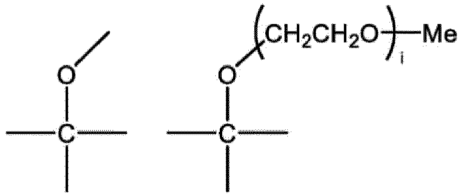

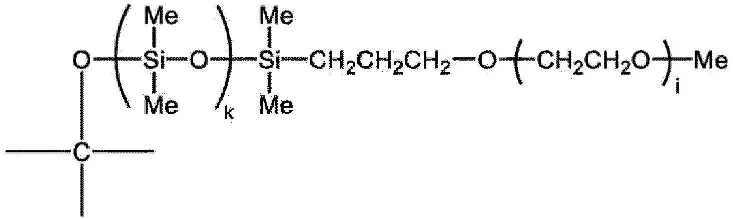

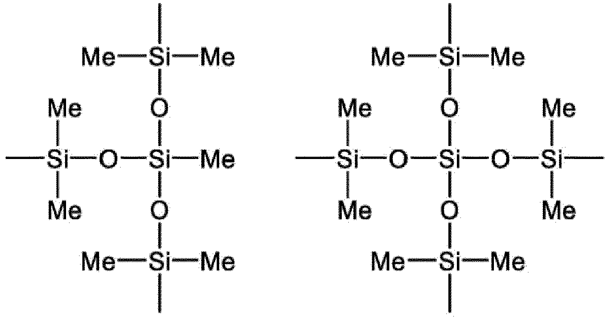

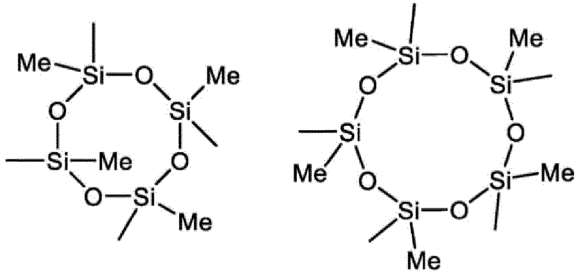

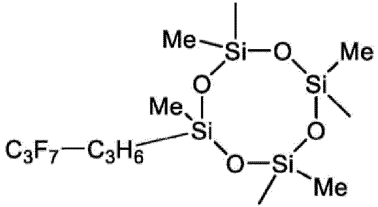

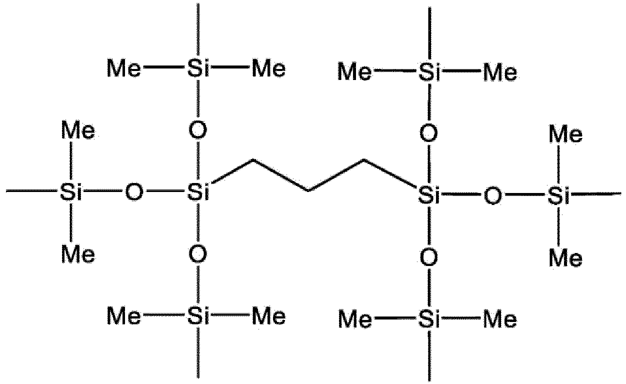

In the formulae, i represents an integer of 1 to 20, k represents an integer of 1 to 50, and Me represents a methyl group.

In Formula (1), Y's each independently represent a single bond or a divalent organic group, the divalent organic group is preferably a substituted or unsubstituted divalent hydrocarbon group having 2 to 12 carbon atoms, and examples thereof include an alkylene group such as an ethylene group, a propylene group (a trimethylene group or a methylethylene group), a butylene group (a tetramethylene group or a methylpropylene group), a hexamethylene group, or an octamethylene group, an arylene group such as a phenylene group, and combinations of two or more kinds of these groups (such as an alkylene-arylene group). The divalent hydrocarbon group having 2 to 12 carbon atoms may have one or two or more kinds of structures selected from the group consisting of an amide bond, an ether bond, a carbonyl bond, an ester bond, and a diorganosilylene group such as a dimethylsilylene group.

Further, in a case where Z represents a single bond, it is preferable that Y represent a single bond.

Examples of Y include groups represented by the following formulae. In each of the following structures, it is preferable that the bonding site on the left side be bonded to Z and that the bonding site on the right side be bonded to X.

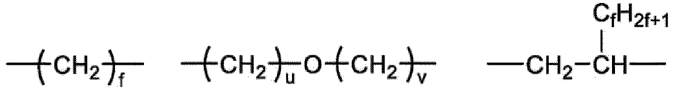

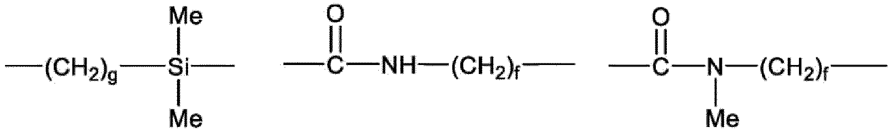

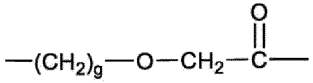

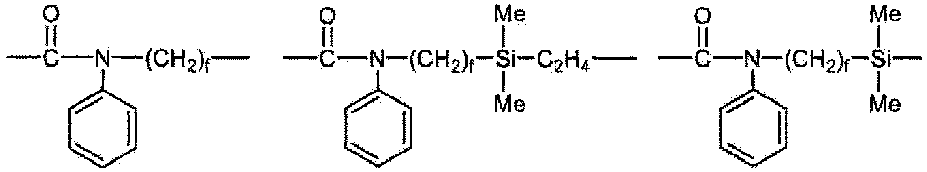

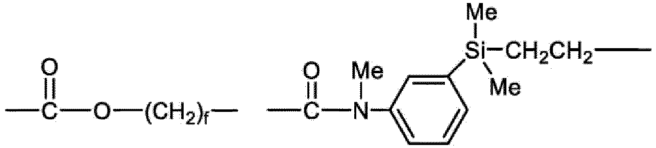

In the formulae, f represents an integer of 2 to 4, u and v each independently represent an integer of 1 to 4, g represents an integer of 2 to 4, and Me represents a methyl group.

In Formula (1), X's each independently represent an alkenyl group having 2 to 8 carbon atoms and particularly 2 to 6 carbon atoms and preferably having a CH₂=CH- structure, and examples thereof include a vinyl group, an allyl group, a propenyl group, an isopropenyl group, a butenyl group, and a hexenyl group. Among these, a vinyl group or an allyl group is particularly preferable.

In Formula (1), β represents an integer of 1 to 7, preferably an integer of 1 to 3, and more preferably 1.

Examples of the compound represented by Formula (1) include compounds represented by the following formulae.

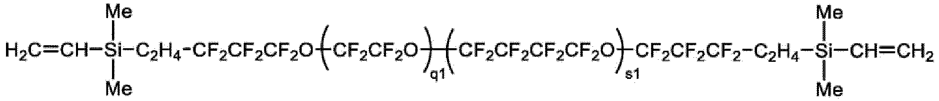

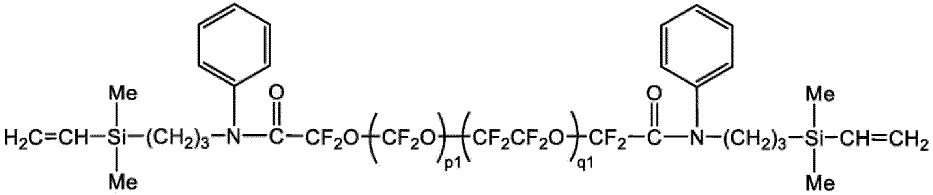

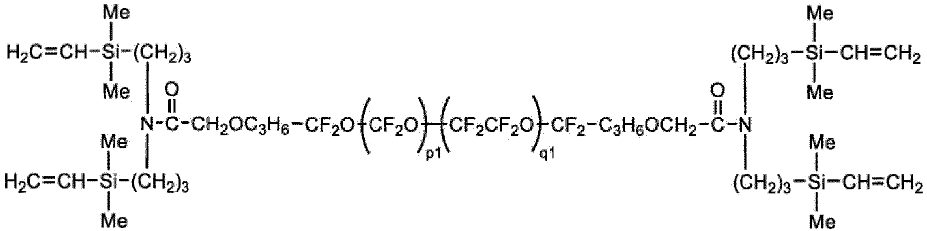

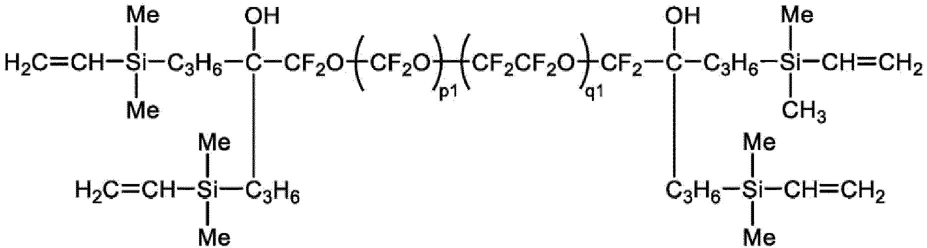

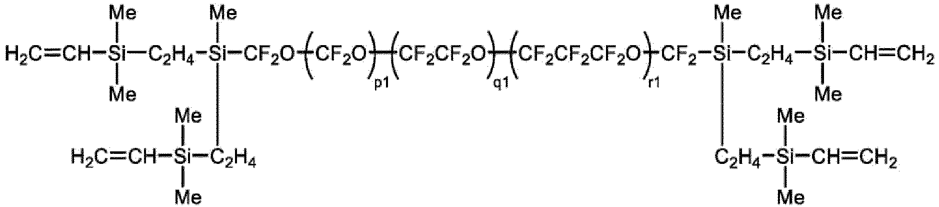

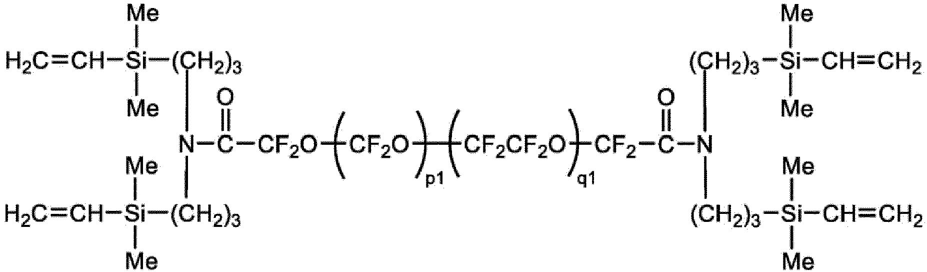

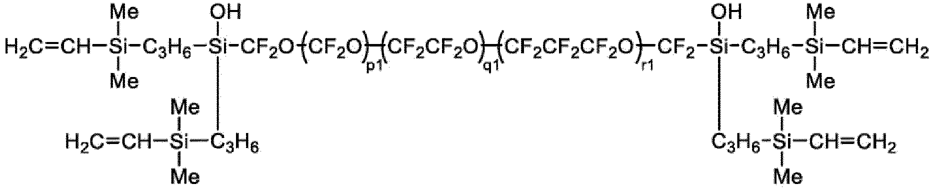

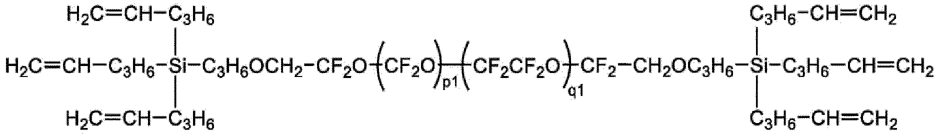

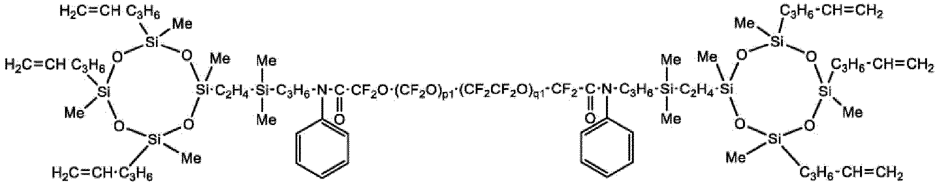

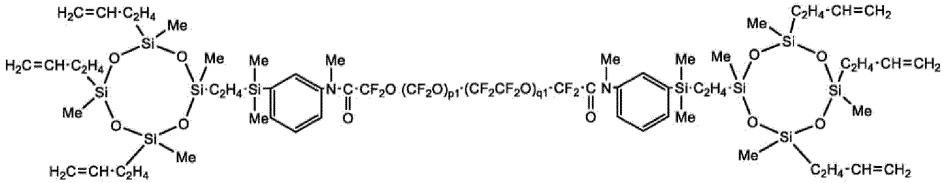

In the formulae, p1, q1, r1, and s1 each independently represent an integer of 1 to 200, the sum of p1, q1, r1, and s1 is in a range of 3 to 300, and the repeating units shown in the parentheses may be randomly bonded to each other. Me represents a methyl group.

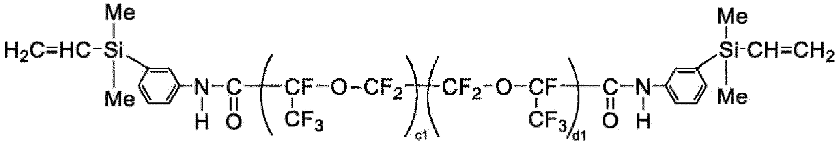

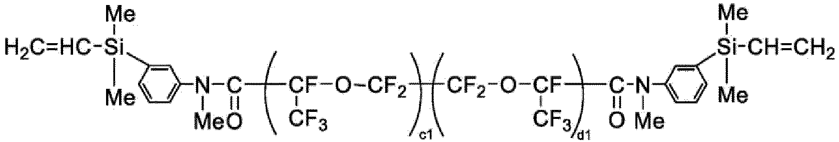

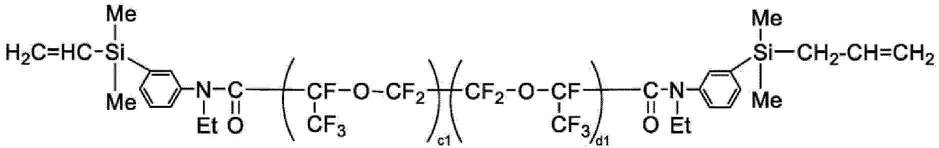

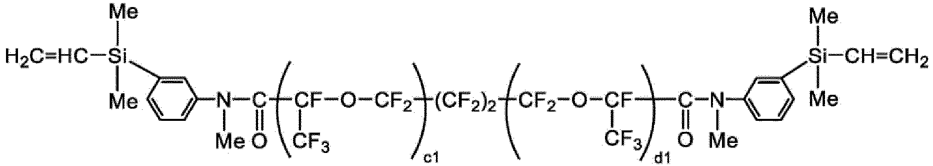

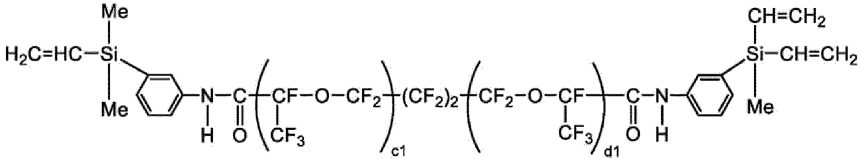

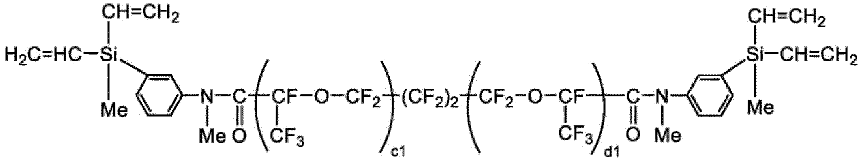

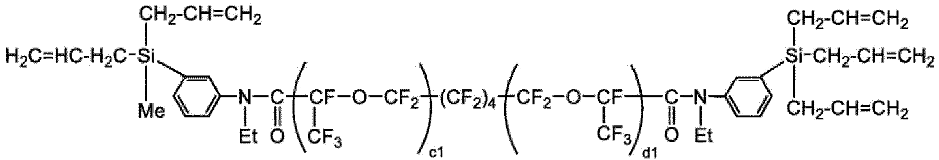

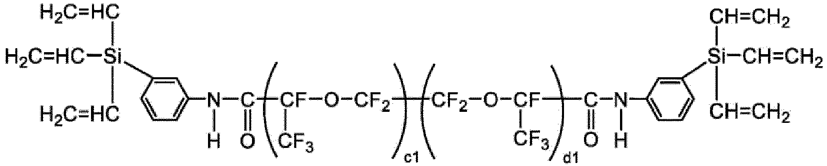

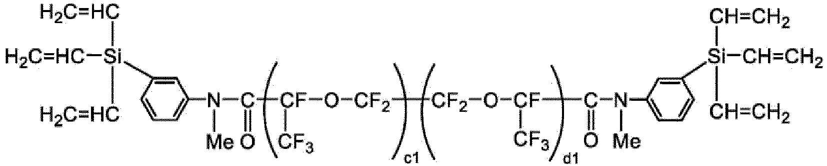

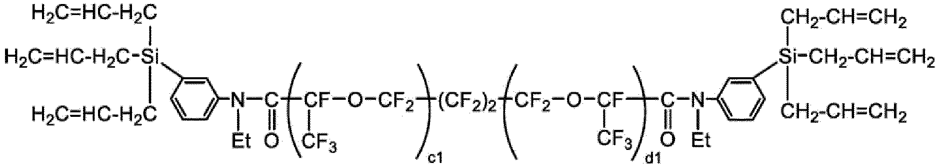

In the formulae, c1 and d1 each represent an integer of 1 to 150, the sum of c1 and d1 is in a range of 2 to 300, and the repeating units shown in the parentheses may be randomly bonded to each other. Me represents a methyl group, and Et represents an ethyl group.

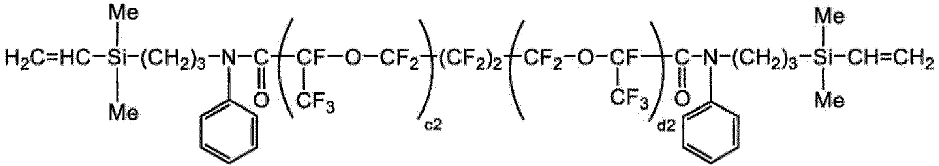

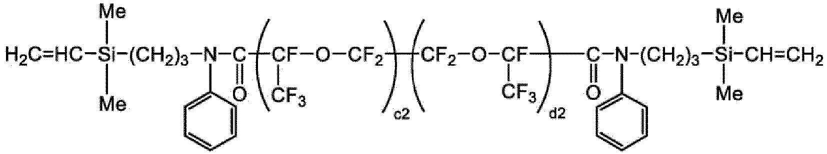

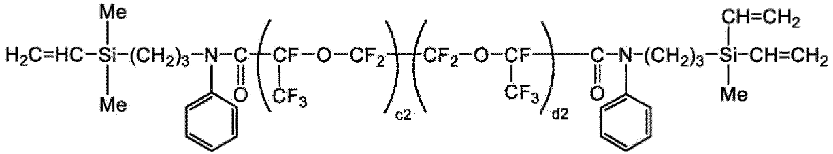

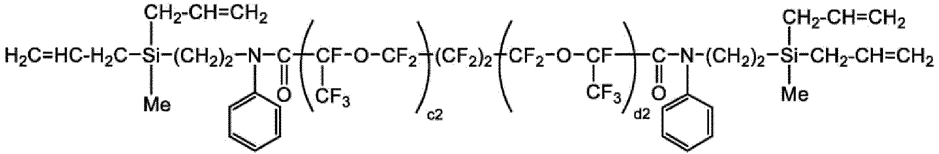

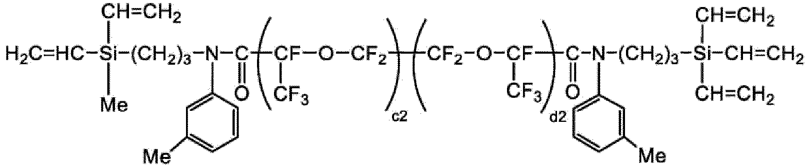

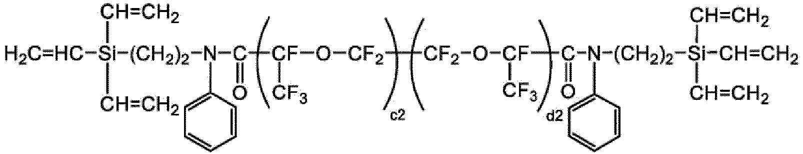

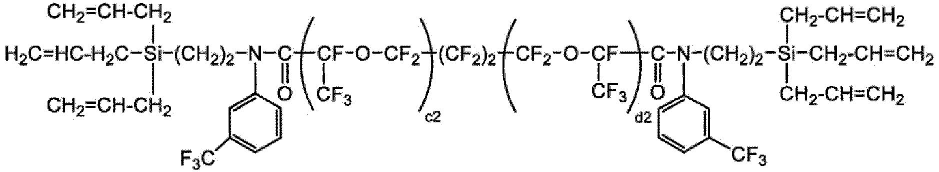

In the formulae, c2 and d2 each represent an integer of 1 to 150, the sum of c2 and d2 is in a range of 2 to 300, and the repeating units shown in the parentheses may be randomly bonded to each other. Me represents a methyl group.

### Component (A2)

The component (A2) is a compound that contains at least one alkenyl group only at one terminal of a molecular chain and contains a perfluoro(poly)ether residue in the main chain.

The alkenyl group contained in the component (A2) is preferably an alkenyl group having 2 to 14 carbon atoms and particularly 2 to 6 carbon atoms and having a CH₂=CH-structure, and examples thereof include a vinyl group, an allyl group, a propenyl group, an isopropenyl group, a butenyl group, and a hexenyl group. Among these, a vinyl group or an allyl group is particularly preferable.

The component (A2) contains at least one alkenyl group (for example, 1 to 7 alkenyl groups), preferably 1 to 3 alkenyl groups, and particularly preferably one alkenyl group in one molecule and contains a perfluoro(poly)ether residue in the main chain. A linear compound is preferable as the component (A2).

In the present invention, the perfluoro(poly)ether residue denotes a group formed by removing at least one fluorine atom from the terminal position of perfluoro(poly)ether. The perfluoro(poly)ether residue of the component (A2) may be monovalent or divalent, but it is preferable that the component (A2) contain a monovalent perfluoro(poly)ether residue at one terminal of a molecular chain with at least one alkenyl group provided only at the other terminal of the molecular chain.

The content of the alkenyl group in the component (A2) is preferably in a range of 0.0025 to 0.15 mol/100 g and more preferably in a range of 0.0035 to 0.1 mol/100 g. In a case where the content of the alkenyl group is 0.0025 mol/100 g or greater, the degree of crosslinking of the composition is sufficient, and thus there is no risk of occurrence of curing failure. Meanwhile, in a case where the content of the alkenyl group is 0.15 mol/100 g or less, there is no risk of degradation of mechanical properties of a cured product (perfluoro(poly)ether rubber cured product) produced by curing the composition. Further, the content of the alkenyl group in the component (A2) can be calculated from ¹H-NMR measurement.

The kinetic viscosity of the component (A2) at 25°C is preferably in a range of 25 to 1,000,000 mm²/s and more preferably in a range of 100 to 100,000 mm²/s. In a case where the kinetic viscosity thereof is in a range of 25 mm²/s to 1,000,000 mm²/s, a perfluoro(poly)ether compound-containing curable composition with satisfactory handleability can be obtained.

The component (A2) may be used alone or in combination of two or more kinds thereof.

A compound represented by General Formula (2) is preferable as such a component (A2).

Rf²-U-Z(-Y-X)_{β} (2)

In Formula (2), U, Z, Y, X, and β each have the same definition as that for U, Z, Y, X, and β in Formula (1) representing the component (A1), and examples thereof include the same groups as those for U, Z, Y, X, and β described above. The details thereof are as described above and will not be provided here.

In Formula (2), Rf² represents a monovalent perfluoro(poly)ether residue. Rf² may represent, for example, a monovalent group represented by A-Rf¹. Here, Rf¹ has the same definition as that for Rf¹ that represents a divalent perfluoro(poly)ether residue in Formula (1) representing the component (A1), and examples thereof include the same groups as those for Rf¹ described above. The details thereof are as described above and will not be provided here. A represents a fluorine atom or a monovalent fluorine-containing group having a -CF₃ group at a terminal. Examples of the monovalent fluorine-containing group having a -CF₃ group at a terminal include a monovalent perfluoroalkyl group, and specific examples thereof include CF₃CF₂CF₂CF₂-, CF₃CF₂CF₂-, CF₃CF₂-, and CF₃-. It is preferable that A represent a fluorine atom. Rf² has at least one and preferably two or more perfluorooxyalkylene units as Rf¹ in A-Rf¹. Rf² may have a perfluoroalkylene unit in addition to the perfluorooxyalkylene unit as Rf¹ in A-Rf¹ and may have a monovalent fluorine-containing group having a -CF₃ group at a terminal as A. The position of the perfluoroalkylene unit may be any of a middle position or a terminal position in Rf².

Examples of the compound represented by Formula (2) include compounds represented by the following formulae.

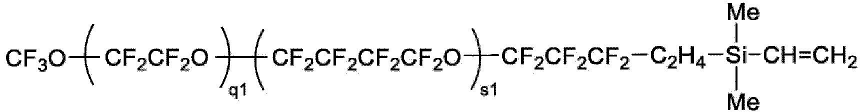

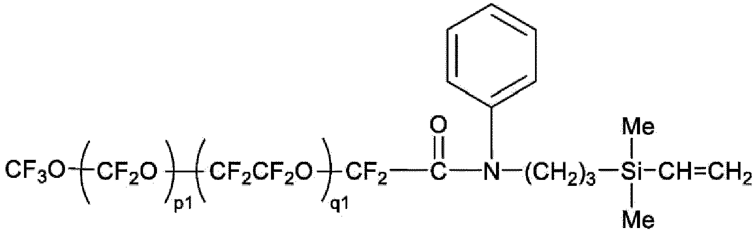

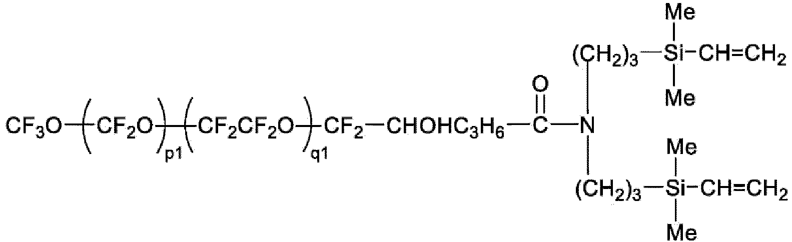

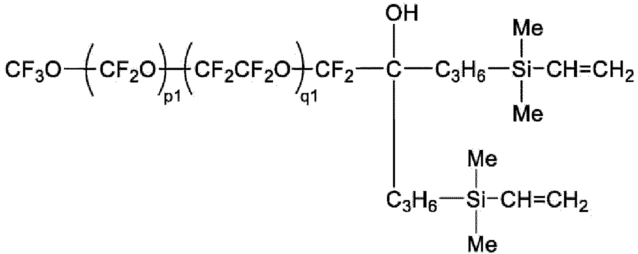

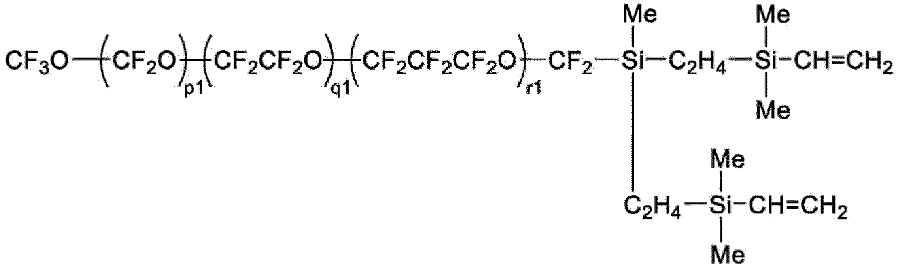

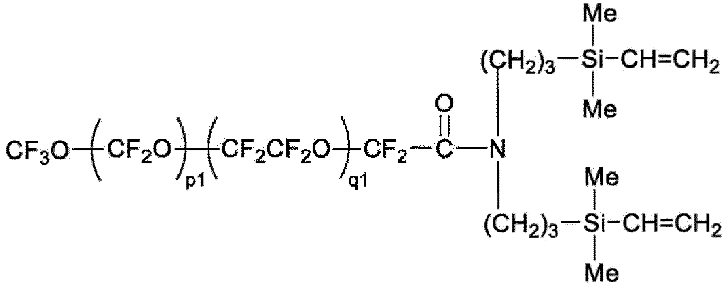

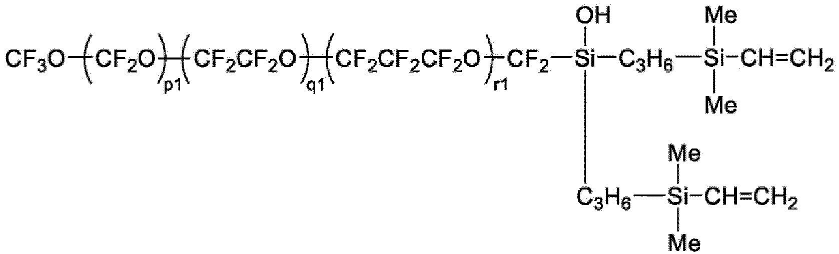

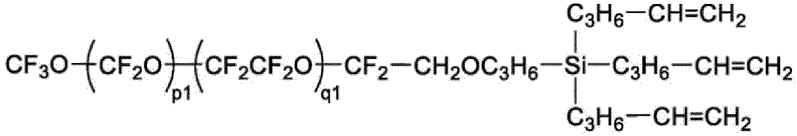

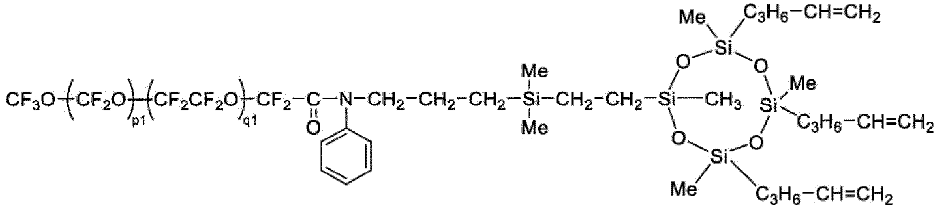

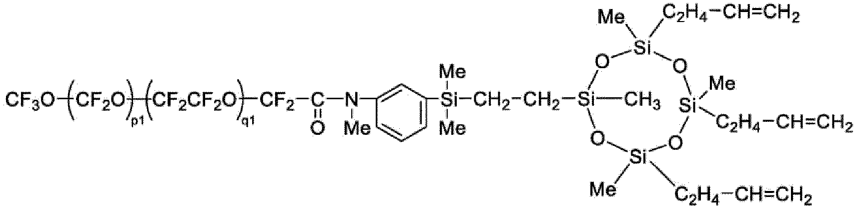

In the formulae, p1, q1, r1, and s1 each independently represent an integer of 1 to 200, the sum of p1, q1, r1, and s1 is in a range of 3 to 300, and the repeating units shown in the parentheses may be randomly bonded to each other. Me represents a methyl group.

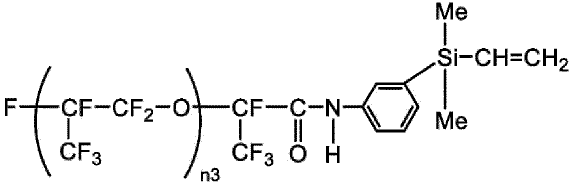

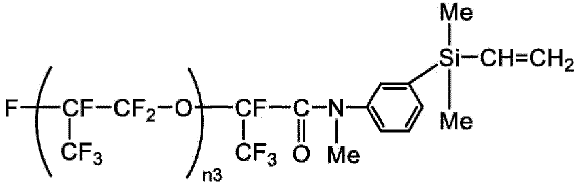

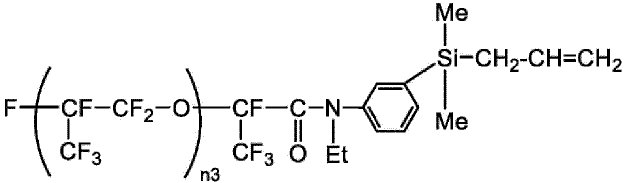

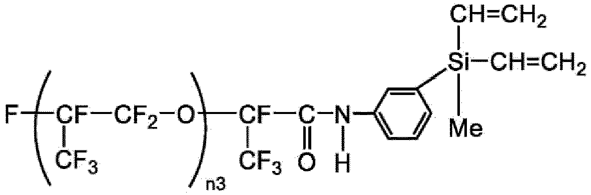

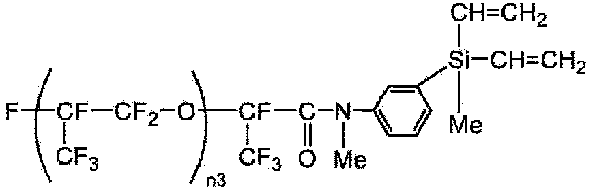

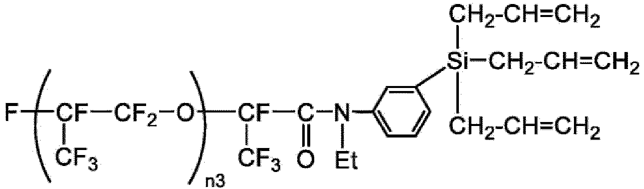

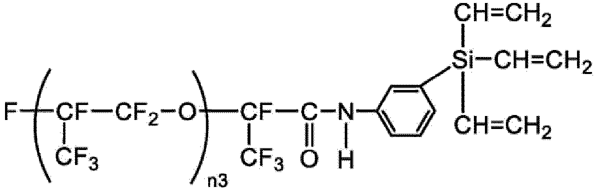

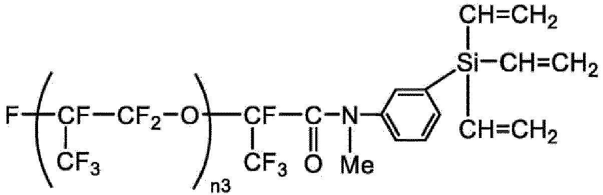

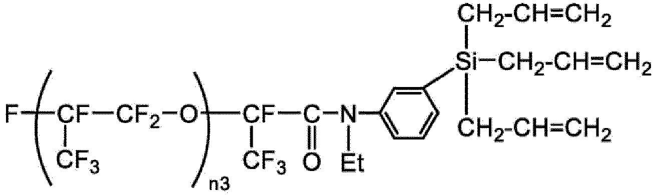

In the formulae, n3 represents an integer of 1 to 200, Me represents a methyl group, and Et represents an ethyl group.

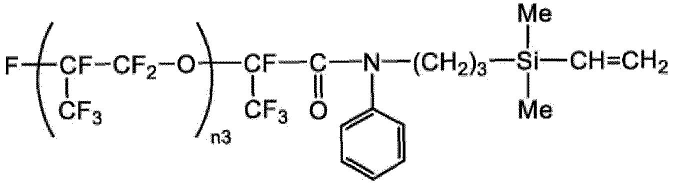

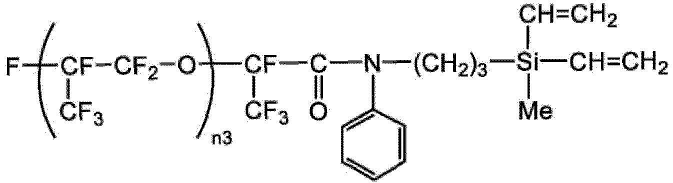

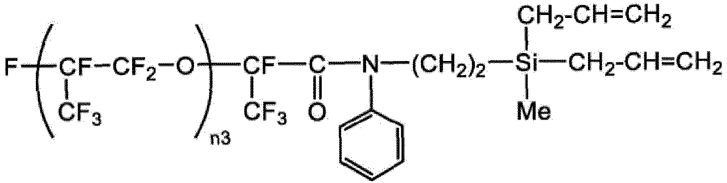

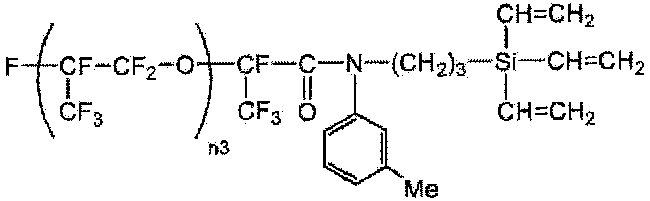

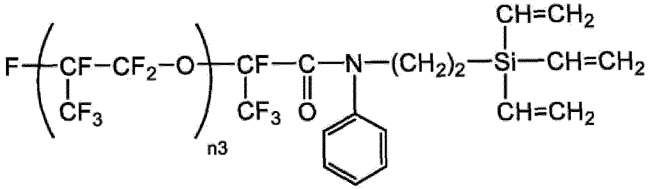

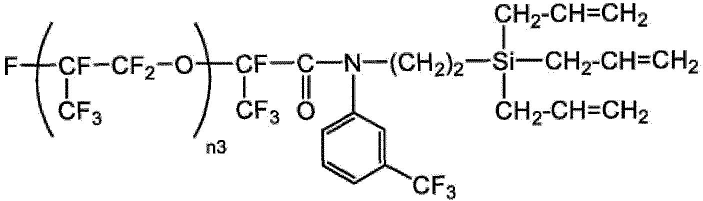

In the formulae, n3 represents an integer of 1 to 200, and Me represents a methyl group.

The total amount of the component (A2) is 0.10% by mole or greater and 50% by mole or less, preferably 0.5% by mole or greater and 40% by mole or less, and more preferably 2% by mole or greater and 20% by mole or less with respect to the total amount of the components (A1) and (A2). When the amount of the component (A2) is less than 0.1% by mole with respect to the total amount of the components (A1) and (A2), the elongation properties are not improved in some cases. Meanwhile, when the amount of the component (A2) is greater than 50% by mole with respect to the total amount of the components (A1) and (A2), a rubber molded product is not obtained in some cases even when the composition is cured.

The total amount of the components (A1) and (A2) is preferably in a range of 50% to 95% by mass and more preferably in a range of 60% to 90% by mass with respect to the total amount of the curable composition according to the present invention.

### Component (B)

The component (B) is a fluorine-modified organic silicon compound having two or more hydrogen atoms (hydrosilyl group represented by SiH) bonded to silicon atoms in one molecule and acts as a crosslinking agent (curing agent) that can undergo a hydrosilylation addition reaction with respect to the components (A1) and (A2) in the perfluoro(poly)ether compound-containing curable composition according to the present invention. It is preferable that the component (B) be an organic silicon compound (particularly, fluorine-containing organohydrogenpolysiloxane) containing a perfluoroalkyl group having two or more carbon atoms (that is, 5 or more fluorine atoms) or a perfluorooxyalkyl group having 1 or more carbon atoms (that is, 3 or more fluorine atoms) in one molecule or containing a perfluoroalkylene group having 2 or more carbon atoms (that is, 4 or more fluorine atoms) or a perfluorooxyalkylene group having 2 or more carbon atoms (that is, 4 or more fluorine atoms) and containing two or more hydrogen atoms (SiH group) directly bonded to silicon atoms in one molecule and no epoxy group and no alkoxy group directly bonded to silicon atoms in one molecule.

The perfluoroalkyl group, the perfluorooxyalkyl group, the perfluoroalkylene group, and the perfluorooxyalkylene group are groups introduced from the viewpoints of the compatibility of the component (B) with the components (A1) and (A2), the dispersibility, the uniformity after curing, and the like.

Examples of the perfluoroalkyl group and the perfluorooxyalkyl group include groups represented by General Formulae (4) and (5):

C_{f}F_{2f+1}- (4)

wherein, in the formula, f represents an integer of 2 to 10 and preferably an integer of 3 to 7; and 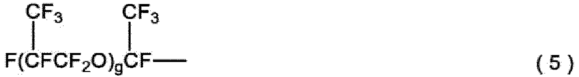
wherein, in Formula (5), g represents an integer of 1 to 50 and preferably an integer of 2 to 30.

Further, examples of the perfluoroalkylene group and the perfluorooxyalkylene group include groups represented by General Formulae (6) to (8):

-CₕF₂ₕ- (6)

wherein, in Formula (6), h represents an integer of 2 to 20 and preferably an integer of 2 to 10; 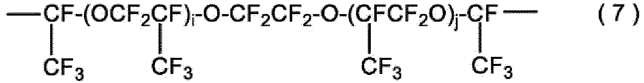
wherein, in Formula (7), i and j each represent an integer of 1 or greater and preferably an integer of 1 to 100, and an average value of i + j is in a range of 2 to 200 and preferably in a range of 2 to 100; and

   -CF₂O-(CF₂CF₂O)ₖ(CF₂O)ₗ-CF₂- (8)
wherein, in Formula (8), k and l each represent an integer of 1 to 50 and preferably an integer of 1 to 30, and an average value of k + l is in a range of 2 to 100 and preferably in a range of 2 to 60. The repeating units may be randomly bonded to each other.

Further, it is preferable that the perfluoroalkyl group, the perfluorooxyalkyl group, the perfluoroalkylene group, and the perfluorooxyalkylene group (hereinafter, these groups will also be collectively referred to as "monovalent or divalent fluorine-containing organic group") be connected to silicon atoms via a divalent linking group. As the divalent linking group, a substituted or unsubstituted divalent hydrocarbon group having 2 to 13 carbon atoms and particularly 2 to 8 carbon atoms, which may have an oxygen atom, a nitrogen atom, or a silicon atom, is preferable. Specific examples thereof include an alkylene group such as an ethylene group, a propylene group, or a butylene group, an arylene group such as a phenylene group, combinations thereof, and groups in which one or two or more structures selected from the group consisting of an ether-bonded oxygen atom, an amide bond, a carbonyl bond, an ester bond, and a diorganosilylene group such as a dimethylsilylene group are interposed in the above-described groups, and examples of such groups include groups having 2 to 13 carbon atoms shown below. Further, it is preferable that the bonding site on the left side be bonded to a silicon atom and the bonding site on the right side be bonded to a monovalent or divalent fluorine-containing organic group.

-CH₂CH₂-

-CH₂CH₂CH₂-

-CH₂CH₂CH₂OCH₂-

-CH₂CH₂CH₂-NH-CO-

-CH₂CH₂CH₂-N(Ph)-CO-

-CH₂CH₂CH₂-N(CH₃)-CO-

-CH₂CH₂CH₂-N(CH₂CH₃)-CO-

-CH₂CH₂CH₂-N(CH(CH₃)₂)-CO-

-CH₂CH₂CH₂-O-CO-

-CH₂CH₂-Si(CH₃)₂-Ph'-N(CH₃)-CO-

-CH₂CH₂CH₂-Si(CH₃)₂-Ph'-N(CH₃)-CO-

Here, Ph represents a phenyl group, and Ph's represents a phenylene group.

Further, the monovalent or divalent fluorine-containing organic group in the fluorine-modified organic silicon compound of the component (B) and the monovalent substituent bonded to a silicon atom other than the hydrogen atoms directly bonded to silicon atoms are substituted or unsubstituted alkyl groups or allyl groups having 1 to 20 carbon atoms and preferably 1 to 12 carbon atoms, and examples thereof include an alkyl group such as a methyl group, an ethyl group, a propyl group, a butyl group, a hexyl group, a cyclohexyl group, an octyl group, or a decyl group, an aryl group such as a phenyl group, a tolyl group, or a naphthyl group, and a chloromethyl group, a chloropropyl group, and a cyanoethyl group, in which some or all hydrogen atoms of the above-described groups are substituted with halogen atoms such as chlorine atoms, cyano groups, or the like. Among these, a methyl group is preferable. In addition, the component (B) does not contain an epoxy group and an alkoxy group.

The fluorine-modified organic silicon compound of the component (B) may have a cyclic, chain-like, or three-dimensional net-like structure, or a combination thereof may be used. The number of silicon atoms in the fluorine-modified organic silicon compound is not particularly limited, but is typically in a range of 2 to 60, preferably in a range of 3 to 30, and more preferably in a range of 4 to 30.

Further, the component (B) contains two or more SiH groups and preferably three or more SiH groups in one molecule, and the content of the SiH groups is preferably in a range of 0.0001 to 0.02 mol/g and more preferably in a range of 0.0002 to 0.01 mol/g.

Examples of the component (B) include compounds represented by General Formulae (9) to (15).

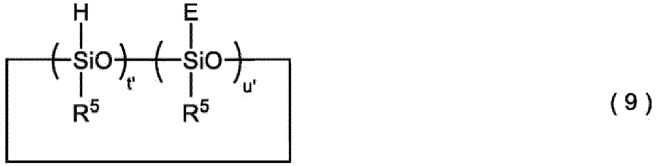

In Formula (9), E's each independently represent a perfluoroalkyl group or perfluorooxyalkyl group bonded to the silicon atom via a divalent hydrocarbon group which may have an oxygen atom, a nitrogen atom, or a silicon atom. R⁵'s each independently represent a substituted or unsubstituted alkyl group or aryl group having 1 to 20 carbon atoms and preferably 1 to 12 carbon atoms. Further, t' represents an integer of 2 to 6 and preferably an integer of 3 to 6, u' represents an integer of 1 to 4 and preferably an integer of 1 to 3, and the sum of t' + u' is in a range of 4 to 10 and preferably in a range of 4 to 9. Here, the order of bonding between -(Si(H)(R⁵)O)- and (Si(E)(R⁵)O)- is not limited.

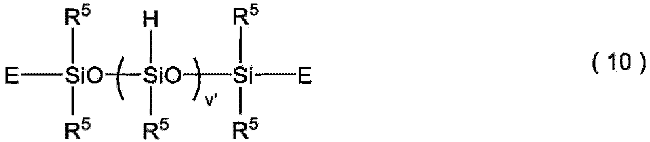

In Formula (10), E's each independently have the same definition as that for E described above, and R⁵'s each independently have the same definition as that for R⁵. Further, v' represents an integer of 2 to 50 and preferably an integer of 3 to 30.

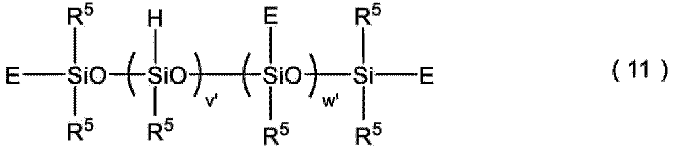

In Formula (11), E's each independently have the same definition as that for E described above, and R⁵'s each independently have the same definition as that for R⁵. v' represents an integer of 2 to 50 and preferably an integer of 3 to 30, w' represents an integer of 1 to 40 and preferably an integer of 1 to 20, the sum of v' + w' is in a range of 4 to 60 and preferably in a range of 4 to 50. Here, the order of bonding between -(Si(H)(R⁵)O)- and - (Si(E)(R⁵)O)- is not limited.

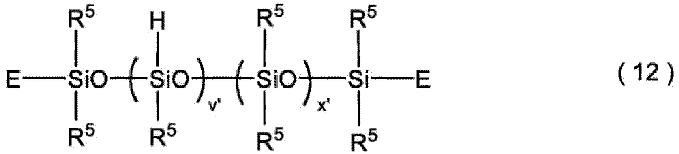

In Formula (12), E's each independently have the same definition as that for E described above, and R⁵'s each independently have the same definition as that for R⁵. v' represents an integer of 2 to 50 and preferably an integer of 3 to 30, x' represents an integer of 1 to 40 and preferably an integer of 1 to 20, the sum of v' + x' is in a range of 4 to 60 and preferably in a range of 4 to 50. Here, the order of bonding between -(Si(H)(R⁵)O)- and - (Si(R⁵)₂O)- is not limited.

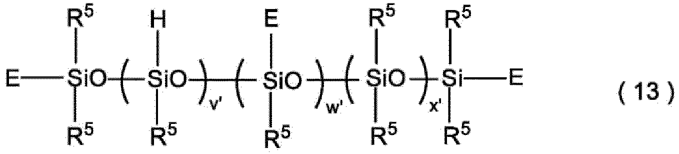

In Formula (13), E's each independently have the same definition as that for E described above, and R⁵'s each independently have the same definition as that for R⁵. v' represents an integer of 2 to 50 and preferably an integer of 3 to 30, w' represents an integer of 1 to 40 and preferably an integer of 1 to 20, x' represents an integer of 1 to 40 and preferably an integer of 1 to 20, the sum of v' + w' + x' is in a range of 5 to 60 and preferably in a range of 5 to 50. Here, the order of bonding between -(Si(H)(R⁵)O)-, -(Si(E)(R⁵)O)-, and - (Si(R⁵)₂O)- is not limited.

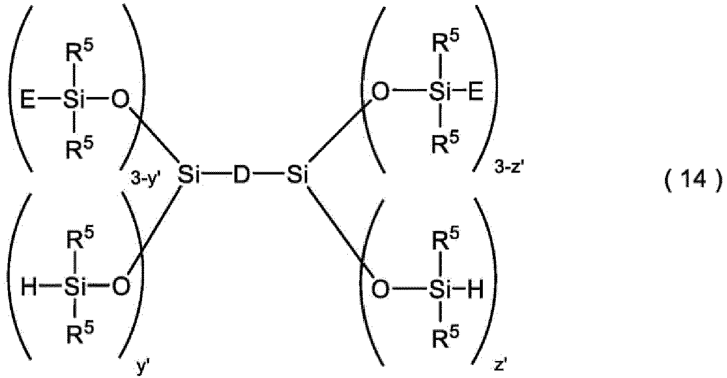

In Formula (14), D represents an oxygen atom, an alkylene group, or a perfluoroalkylene group or perfluorooxyalkylene group bonded to each of silicon atoms adjacent to each other via a divalent hydrocarbon group which may have an oxygen atom or a nitrogen atom. Further, E's each independently have the same definition as that for E described above, R⁵'s each independently have the same definition as that for R⁵ described above. Further, y' represents an integer of 0 to 3, z' represents an integer of 0 to 3, and the sum of y' + z' is in a range of 2 to 6 and preferably in a range of 3 to 5. Further, in a case where the sum of y' + z' is 6, D represents a perfluoroalkylene group or perfluorooxyalkylene group bonded to each of silicon atoms adjacent to each other via a divalent hydrocarbon group which may have an oxygen atom or a nitrogen atom.

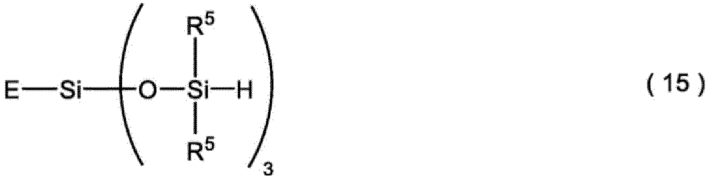

In Formula (15), E has the same definition as that for E, and R⁵'s each independently have the same definition as that for R⁵ described above.

In Formulae (9) to (15), E's each independently represent a perfluoroalkyl group or perfluorooxyalkyl group bonded to a silicon atom via a divalent hydrocarbon group which may have an oxygen atom, a nitrogen atom, or a silicon atom. Examples of the perfluoroalkyl group or the perfluorooxyalkyl group include groups represented by Formulae (4) and (5). Further, examples of the divalent hydrocarbon group which may have an oxygen atom, a nitrogen atom, or a silicon atom include the above-described divalent linking groups.

In Formulae (9) to (15), R⁵'s each independently represent a substituted or unsubstituted alkyl group or aryl group having 1 to 20 carbon atoms and preferably 1 to 12 carbon atoms, and examples thereof include the same groups as those for the monovalent or divalent fluorine-containing organic group and the monovalent substituent bonded to a silicon atom other than the hydrogen atoms directly bonded to the silicon atoms described above.

In Formula (14), D represents an oxygen atom, an alkylene group, or a perfluoroalkylene group or perfluorooxyalkylene group bonded to each of silicon atoms adjacent to each other via a divalent hydrocarbon group which may have an oxygen atom or a nitrogen atom. Examples of the alkylene group include an alkylene group having 2 to 6 carbon atoms such as an ethylene group, a propylene group, or a butylene group, and examples of the perfluoroalkylene group or the perfluorooxyalkylene group include groups represented by Formulae (6) to (8). Further, examples of the divalent hydrocarbon group which may have an oxygen atom or a nitrogen atom include the above-described divalent linking groups.

Specific examples of the component (B) include the following compounds. These compounds may be used alone or in combination of two or more kinds thereof. In the following formulae, Me represents a methyl group, Ph represents a phenyl group, f' represents an integer of 2 to 10, g' represents an integer of 1 to 50, h' represents an integer of 1 to 20, i' and j' each represent an integer of 1 to 100, the sum of i' + j' is in a range of 2 to 200, k' and l' each represent an integer of 1 to 50, and the sum of k' + l' is in a range of 2 to 100.

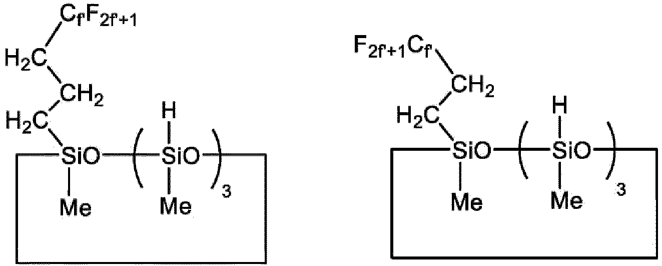

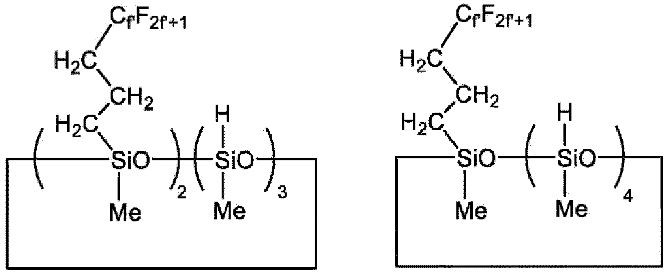

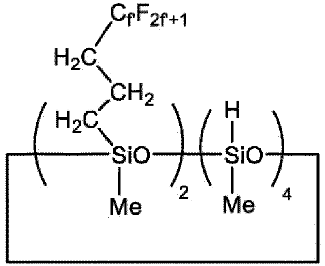

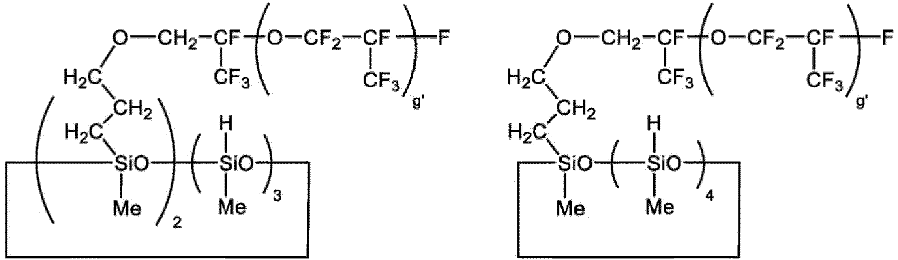

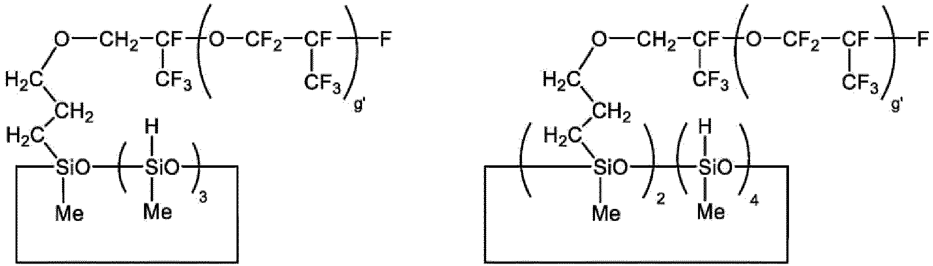

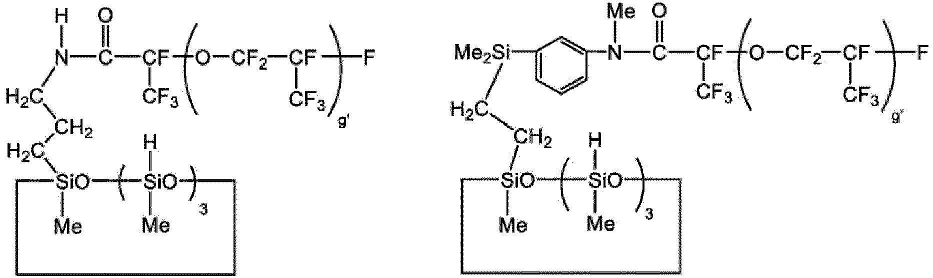

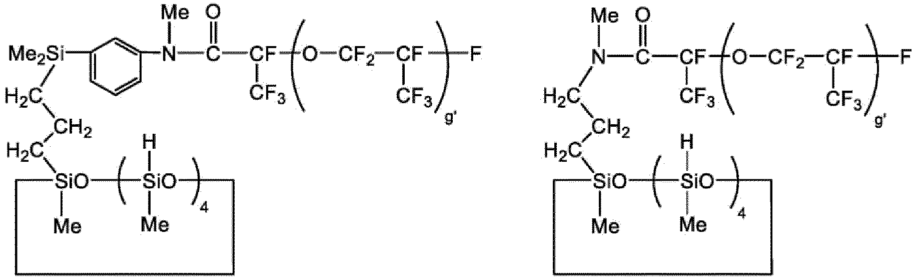

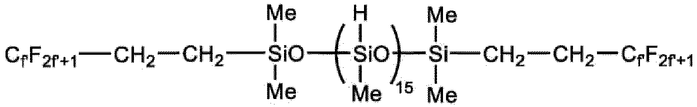

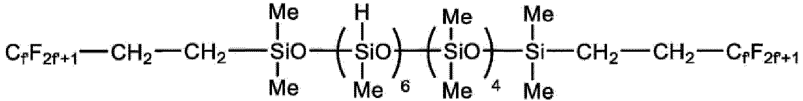

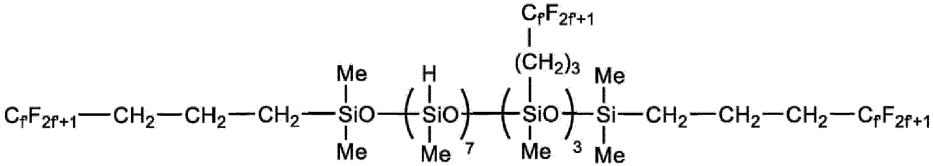

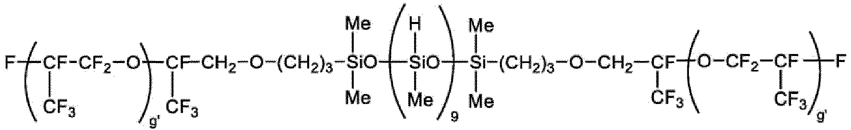

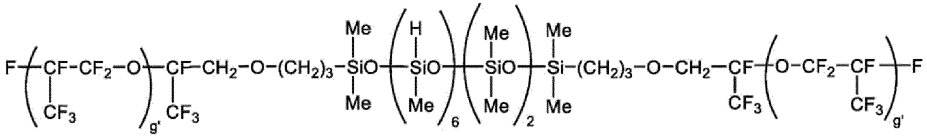

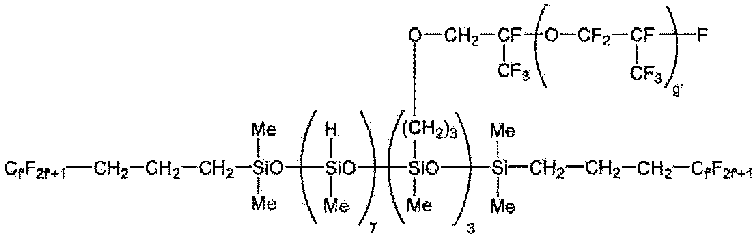

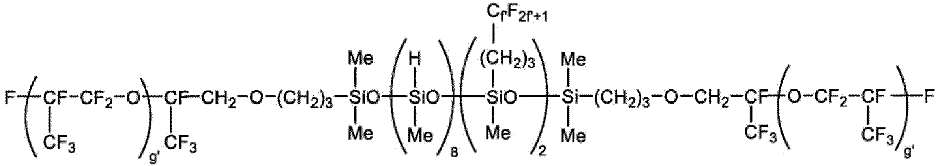

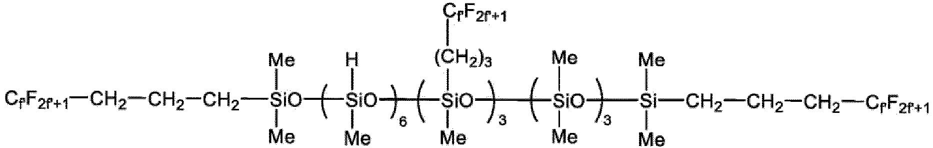

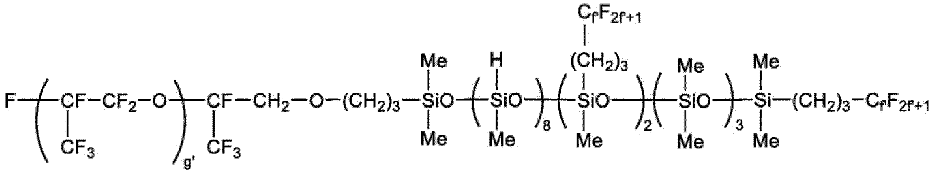

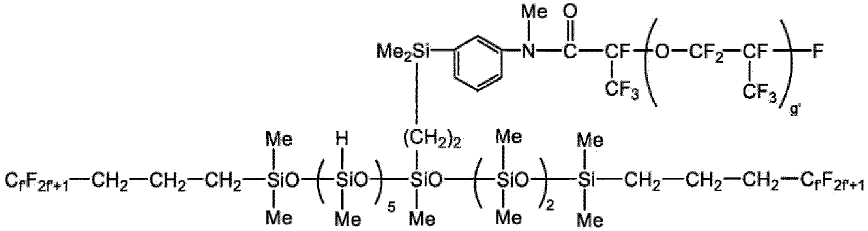

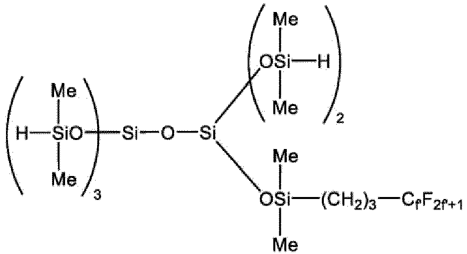

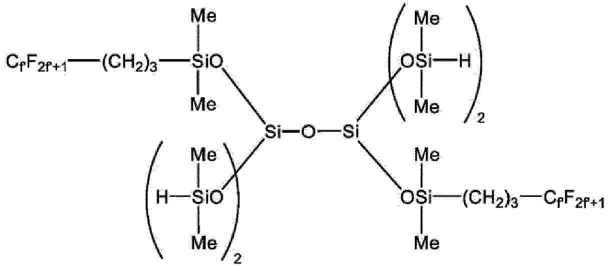

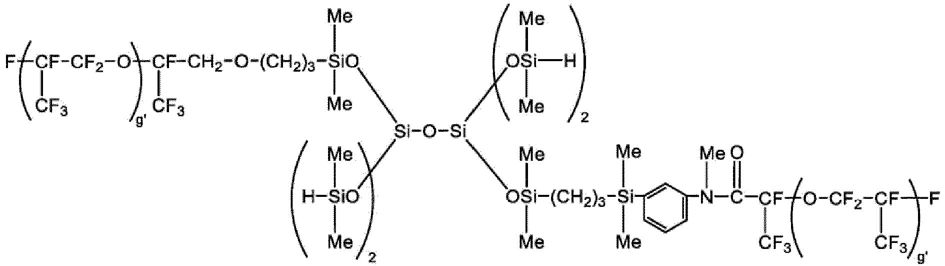

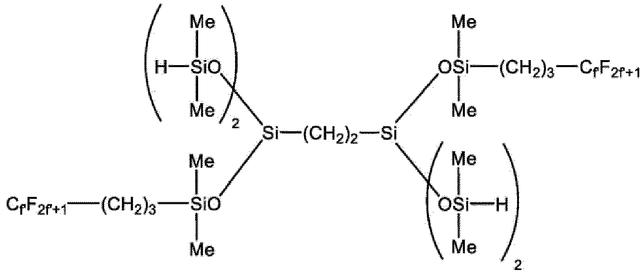

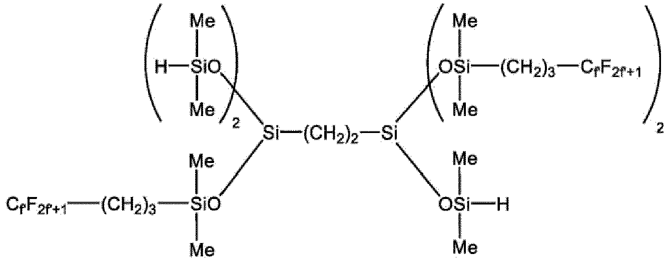

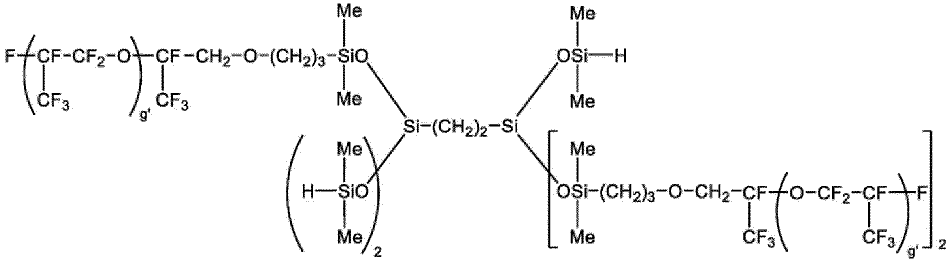

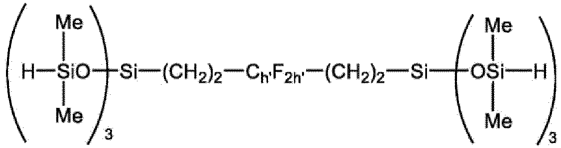

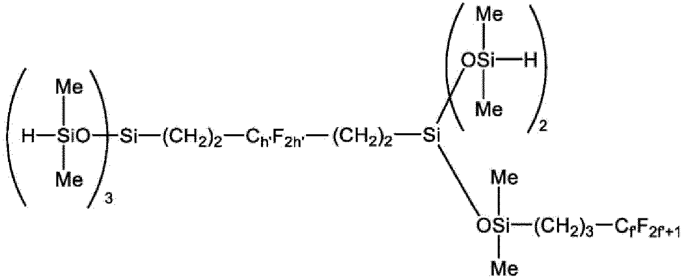

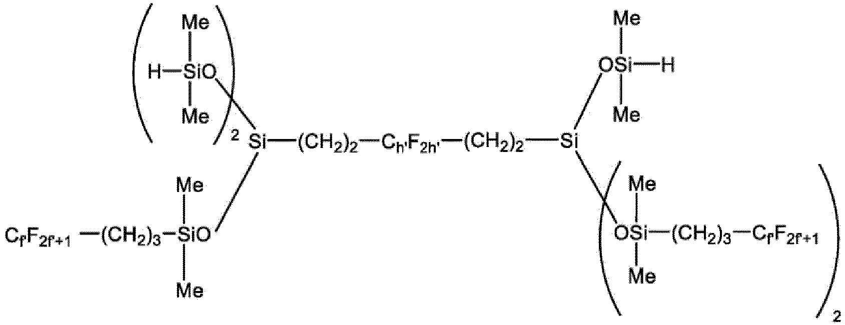

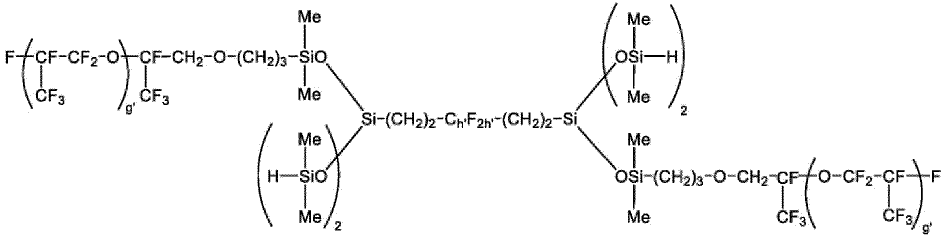

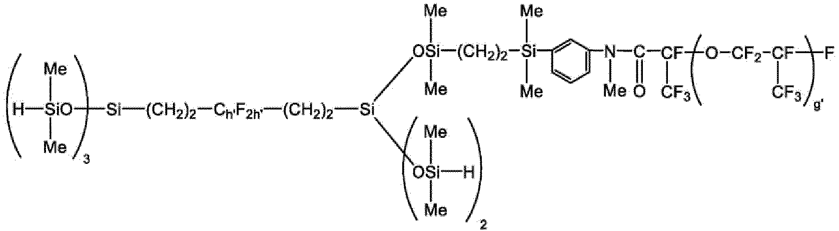

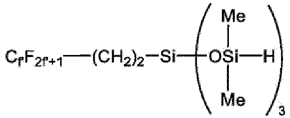

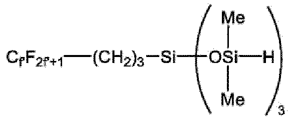

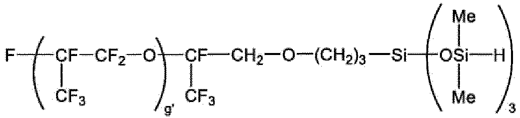

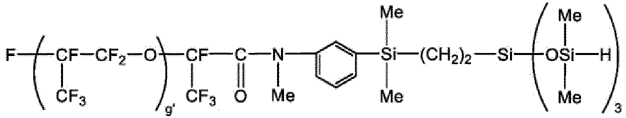

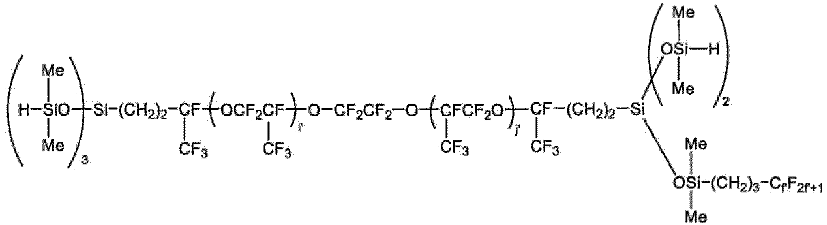

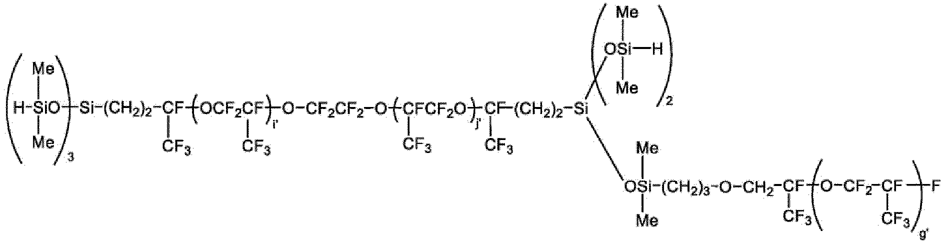

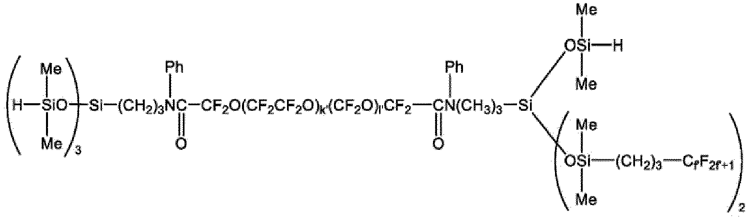

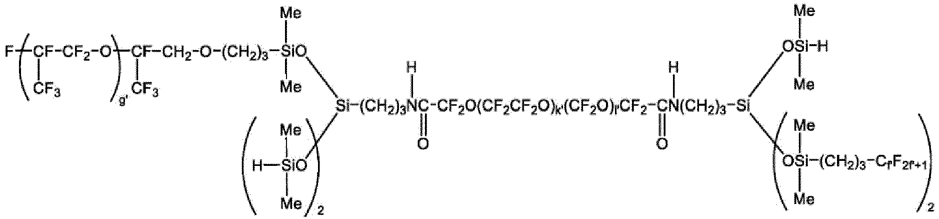

The component (B) may be used alone or in combination of two or more kinds thereof.

Further, the amount of the component (B) to be blended is an amount (molar ratio) as determined such that the amount of hydrogen atoms (SiH group) bonded to the silicon atoms in the component (B) is in a range of 0.5 to 5 moles, preferably in a range of 0.5 to 3 moles, and more preferably in a range of 0.6 to 2 moles with respect to 1 mole of the alkenyl group in the components (A1) and (A2). When the amount of the SiH group is less than 0.5 moles, the degree of crosslinking of the cured product is insufficient in some cases. Meanwhile, when the amount thereof is greater than 5 moles, the storage stability of the composition is degraded, and the heat resistance of the cured product to be obtained after curing of the composition is decreased in some cases.

### Component (C)

A hydrosilylation reaction catalyst as the component (C) is a catalyst that promotes an addition reaction between the components (A1) and (A2) and the component (B). The hydrosilylation reaction catalyst is usually a noble metal (particularly a platinum group metal) or a compound thereof, and platinum or a platinum compound is frequently used from the viewpoint of relative availability.

Examples of the platinum compound include chloroplatinic acid, a complex of chloroplatinic acid and an olefin such as ethylene, a complex of chloroplatinic acid and alcohol or vinylsiloxane, and metallic platinum supported by silica, alumina, carbon, or the like. Known examples of the hydrosilylation reaction catalyst other than the platinum and the compound thereof include a rhodium-based compound, a ruthenium-based compound, an iridium-based compound, and a palladium-based compound, and examples thereof include RhCl(PPh₃)₃, RhCl(CO)(PPh₃)₂, Ru₃(CO)₁₂, IrCl(CO)(PPh₃)₂, and Pd(PPh₃)₄. In the formulae, Ph represents a phenyl group.

Any of these catalysts can be used in a solid state in a case of a solid catalyst, but it is preferable that a solution obtained by dissolving chloroplatinic acid or a complex in an appropriate solvent, for example, toluene or ethanol be used after being made compatible with the components (A1) and (A2) in order to obtain a more uniform cured product.

The component (C) may be used alone or in combination of two or more kinds thereof.

The amount of these catalysts to be used is not particularly limited, and a desired curing rate can be obtained by adjusting the amount of the catalysts, but the amount thereof is usually in a range of 0.1 to 2,000 ppm, preferably in a range of 0.1 to 500 ppm, and particularly preferably in a range of 0.5 to 200 ppm (in terms of mass of platinum group metal atoms) with respect to the mass of the components (A1) and (A2) from the economic viewpoint or from the viewpoint of obtaining a satisfactory cured product, and can be appropriately adjusted according to the desired curing rate.

### Component (D)

The component (D) is a reinforcing filler that imparts excellent mechanical strength to a perfluoro(poly)ether rubber cured product obtained by curing the composition of the present invention.

Examples of the reinforcing filler as the component (D) include hydrophobic silica powder, hydrophilic silica powder, calcium carbonate, diatomaceous earth, carbon black, fumed titanium dioxide, quartz, aluminum oxide, aluminum hydroxide, zinc oxide, zinc carbonate, and glass beads. Among these, hydrophobic silica powder is preferable.

Examples of the hydrophobic silica powder as the component (D) include hydrophobic silica powder (surface-hydrophobized silica powder) obtained by performing a hydrophobic treatment on a surface of silica powder such as aerosol silica (fumed silica or dry silica), precipitated silica (wet silica), spherical silica (fused silica), sol-gel silica, or silica aerogel with at least one organic silicon compounds selected from silane compounds containing a hydrolyzable group, for example, organochlorosilane such as dimethyldichlorosilane, trimethylchlorosilane, methyltrichlorosilane, vinyldimethylchlorosilane, divinylmethylchlorosilane, or trivinylchlorosilane and organoalkoxysilane such as dimethyldimethoxysilane, trimethylmethoxysilane, methyltrimethoxysilane, vinyldimethylmethoxysilane, divinylmethylmethoxysilane, trivinylmethoxysilane, dimethyldiethoxysilane, trimethylethoxysilane, methyltriethoxysilane, vinyldimethylethoxysilane, divinylmethylethoxysilane, or trivinylethoxysilane, organodisilazane such as hexamethyldisilazane, 1,3-divinyl-1,1,3,3-tetramethyldisilane, 1,3-diphenyl-1,1,3,3-tetramethyldisilazane, heptamethyldisilazane, or 1,3-bis(chloromethyl)-1,1,3,3-tetramethyldisilazane, and cyclic organopolysilazane such as 1,3,5-trimethyl-1,3,5-trivinylcyclotrisilazane or **1,1,3,3,5,5-hexamethylcyclotrisilazane.** Among these, hydrophobic fumed silica having a surface subjected to a hydrophobic treatment with organochlorosilane or organodisilazane is particularly preferable.

**In** the hydrophobic treatment, the silica powder having the silica surface treated with a surface treatment agent may be directly treated in a powder state in advance, and a commonly known technique can be employed as a typical treatment method. For example, the silica powder can be prepared by placing the untreated silica powder and one or two or more kinds of treatment agents in a mechanical kneading device sealed at a normal pressure or in a fluidized bed, performing a mixing treatment on the mixture at room temperature (25°C ± 10°C ) or by a heat treatment in the presence of an inert gas as necessary, and kneading and drying the mixture. In some cases, a catalyst or water for promoting hydrolysis may be used. The amount of the surface treatment agent to be blended may be set to be greater than or equal to the amount to be calculated from the area where the surface of the silica powder can be covered with the surface treatment agent.

Further, the specific surface area of the silica powder, which is measured by a BET method, is preferably 50 m²/g or greater and particularly preferably 100 m²/g or greater from the viewpoint of improving the mechanical properties, and preferably 300 m²/g or less from the viewpoint that the viscosity of the composition is increased when the silica powder is blended into the composition and as a result, the blending is difficult to carry out in some cases.

The average particle diameter of the hydrophobic silica powder as the component (D) is preferably in a range of 1 to 30 nm and more preferably in a range of 5 to 20 nm. When the average particle diameter thereof is extremely small, the dispersibility of the hydrophobic silica powder in the composition of the present invention is decreased, and thus uniform blending is difficult to achieve in some cases. Meanwhile, when the average particle diameter thereof is extremely large, the viscosity of the composition of the present invention is increased when the hydrophobic silica powder is blended into the composition, and as a result, uniform blending is difficult to achieve in some cases.

Further, in the present invention, the average particle diameter of the hydrophobic silica powder is a value measured by a laser diffraction particle size distribution measuring device.

In the present invention, the hydrophobic silica powder as the component (D) has a bulk density of preferably 30 to 180 g/L and particularly preferably 40 to 150 g/L. When the bulk density of the hydrophobic silica powder is less than 30 g/L, since the viscosity of the composition is increased, the blending of the hydrophobic silica powder into the composition is difficult to carry out in some cases. Meanwhile, when the bulk density thereof is greater than 180 g/L, the reinforcing effect is not sufficiently imparted in some cases. Further, in the present invention, the bulk density is a value measured by a tapping method or the like.

Further, in a case where the hydrophobic silica powder is subjected to a hydrophobic treatment, the degree of the hydrophobic treatment is as determined such that the amount of carbon (carbon content: % by mass) in the surface of the entire hydrophobic silica power is preferably in a range of 0.1% to 20% by mass and more preferably in a range of 0.5% to 10% by mass. When the amount of carbon in the surface is less than 0.1% by mass, the hydrophobic silica powder is difficult to uniformly knead with the components (A1) and (A2) in some cases. Meanwhile, when the amount of carbon in the surface is greater than 20% by mass, the cured product of the composition does not have sufficient mechanical strength in some cases. Further, in the present invention, the amount of carbon in the surface is a value measured by a known element analysis method.

In a case where the hydrophobic silica powder as the component (D) contains an alkenyl group in the carbon of the surface after the treatment, the amount of the alkenyl group in the surface is preferably in a range of 1.0 × 10⁻³ to 2.0 × 10⁻² mol/100 g and more preferably in a range of 1.5 × 10⁻³ to 1.5 × 10⁻² mol/100 g. When the amount of the alkenyl group in the surface is greater than 2.0 × 10⁻² mol/100 g, the hydrophobic silica powder is difficult to uniformly knead with the components (A1) and (A2) in some cases. Further, in the present invention, the amount the alkenyl group in the surface is a value measured by FT-IR.

The component (D) may be used alone or in combination of two or more kinds thereof.

The amount of the reinforcing filler as the component (D) to be blended is preferably in a range of 10 to 40 parts by mass and more preferably in a range of 15 to 30 parts by mass with respect to 100 parts by mass of the components (A1) and (A2). When the amount thereof is less than 10 parts by mass, the mechanical strength of the cured product is insufficient in some cases. Meanwhile, when the amount thereof is greater than 40 parts by mass, the viscosity of the composition is greatly increased, and the blending of the reinforcing filler such as hydrophobic silica powder into the composition is difficult to carry out in some cases.

### Component (E)

The component (E) is a hydrosilylation reaction control agent, which is an optional component to be blended as necessary. Examples of the hydrosilylation addition reaction control agent include acetylenic alcohol such as 1-ethynyl-1-cyclohexanol, 3-methyl-1-butyn-3-ol, 3,5-dimethyl-1-hexyn-3-ol, 3-methyl-1-pentyn-3-ol, or phenylbutynol, a reactant of chlorosilane containing a perfluoroalkyl group represented by Formula (4) or a perfluorooxyalkyl group represented by Formula (5) with acetylenic alcohol, an acetylene compound such as 3-methyl-3-penten-1-yne, 3,5-dimethyl-3-hexen-1-yne, or triallyl isocyanurate, polyvinylsiloxane, and an organic phosphorus compound. The curing reactivity and the storage stability can be appropriately maintained by adding the component (E).

The component (E) may be used alone or in combination of two or more kinds thereof.

**In** a case where the component (E) is blended into the composition, the amount of the component (E) to be blended is optional within a range where the purpose of the present invention is not impaired.

### Component (F)

The component (F) is an optional component to be blended as necessary. In the perfluoro(poly)ether compound-containing curable composition of the present invention, the component (F) acts as an adhesion imparting agent that imparts self-adhesiveness to a cured product obtained by curing the composition and is an organopolysiloxane having, in one molecule, a hydrogen atom directly bonded to a silicon atom, a perfluoroalkyl group or a perfluorooxyalkyl group, and both or any of an epoxy group and a trialkoxysilyl group that are bonded to a silicon atom via a divalent hydrocarbon group which may have an oxygen atom.

The perfluoroalkyl group or the perfluorooxyalkyl group is a group to be introduced from the viewpoints of the compatibility of the component (E) with the components (A1) and (A2), the dispersibility, and the uniformity after curing.

Examples of the perfluoroalkyl group or the perfluorooxyalkyl group include groups represented by General Formulae (4) and (5).

Further, it is preferable that the perfluoroalkyl group or the perfluorooxyalkyl group be connected to a silicon atom constituting a polysiloxane via a divalent hydrocarbon group (linking group) which may have a silicon atom, an oxygen atom, and a nitrogen atom. Examples of the divalent hydrocarbon group include an alkylene group such as an ethylene group, a propylene group, or a butylene group, an arylene group such as a phenylene group, combinations thereof, and groups in which one or two or more structures selected from the group consisting of an ether-bonded oxygen atom, an amide bond, a carbonyl bond, an ester bond, and a diorganosilylene group such as a dimethylsilylene group are interposed in the above-described groups, and examples of such groups include the following groups having 2 to 20 carbon atoms shown below. Further, it is preferable that the bonding site on the left side be bonded to a silicon atom constituting a polysiloxane and the bonding site on the right side be bonded to a perfluoroalkyl group or a perfluorooxyalkyl group.

-CH₂CH₂-

-CH₂CH₂CH₂-

-CH₂CH₂CH₂OCH₂-

-CH₂CH₂CH₂-NH-CO-

-CH₂CH₂CH₂-N(Ph)-CO-

-CH₂CH₂CH₂-N(CH₃)-CO-

-CH₂CH₂CH₂-N(CH₂CH₃)-CO-

-CH₂CH₂CH₂-N(CH(CH₃)₂)-CO-

-CH₂CH₂CH₂-O-CO-

-CH₂CH₂CH₂-Si(CH₃)₂-O-Si(CH₃)₂-CH₂CH₂CH₂-

-CH₂OCH₂CH₂CH₂-Si(CH₃)₂-O-Si(CH₃)₂-CH₂CH₂-

-CH₂CH₂-Si(CH₃)₂-Ph'-N(CH₃)-CO-

-CO-N(CH₃)-Ph'-Si(CH₃)₂-CH₂CH₂-Si(CH₃)₂-O-Si(CH₃)₂-CH₂CH₂-

-CO-NH-Ph'-[Si(CH₃)₂-CH₂CH₂]₃-CH₂-

-CO-N(CH₃)-Ph'-[Si(CH₃)₂-CH₂CH₂]₃-

(Here, Ph represents a phenyl group, and Ph's represents a phenylene group.)

Examples of the epoxy group bonded to a silicon atom via a divalent hydrocarbon group which may have an oxygen atom include an epoxy group represented by General Formula (16) and an alicyclic epoxy group represented by General Formula (17).

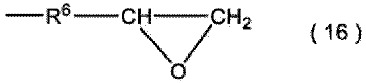

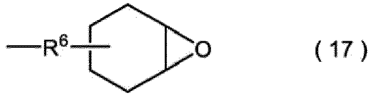

**In** Formulae (16) and (17), R⁶ represents a divalent hydrocarbon group which may have an oxygen atom interposed therein and has preferably 1 to 10 carbon atoms and more preferably 1 to 5 carbon atoms, and specific examples thereof include an alkylene group such as a methylene group, an ethylene group, a propylene group (a trimethylene group or a methylethylene group), a butylene group (a tetramethylene group or a methylpropylene group), a hexylene group (hexamethylene group), or an octylene group (octamethylene group), a cycloalkylene group such as a cyclohexylene group, a cycloalkylene group such as a cyclohexylene group, an oxyalkylene group such as an oxyethylene group, an oxypropylene group, or an oxybutylene group, and the following groups in which a structure such as an ether-bonded oxygen atom or an ester bond is interposed in the above-described groups. Further, in each of the following groups, it is preferable that the bonding site on the left side be bonded to a silicon atom constituting a polysiloxane and that the bonding site on the right side be bonded to an epoxy group.

-CH₂CH₂CH₂OCH₂-

-CH₂CH₂CH₂-O-CO-

Specific examples of such an epoxy group include the following groups.

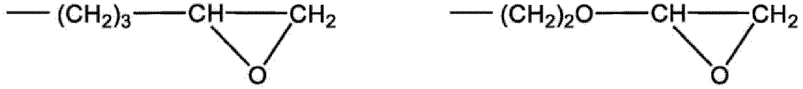

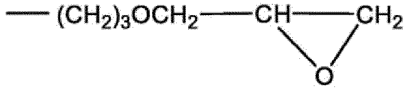

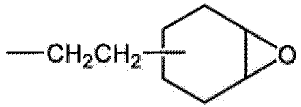

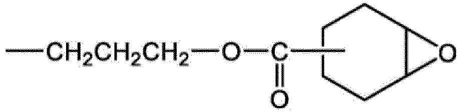

Further, examples of the trialkoxysilyl group bonded to a silicon atom via a divalent hydrocarbon group which may have an oxygen atom include a group represented by General Formula (18).

-R⁷-Si(OR⁸)₃ (18)

In Formula (18), R⁷ represents a divalent hydrocarbon group having preferably 1 to 10 carbon atoms and more preferably 1 to 5 carbon atoms, and specific examples thereof include an alkylene group such as a methylene group, an ethylene group, a propylene group (a trimethylene group or a methylethylene group), a butylene group (a tetramethylene group or a methylpropylene group), a hexylene group (hexamethylene group), a cyclohexylene group, and an octylene group (octamethylene group). Further, R⁸ represents a monovalent hydrocarbon group having preferably 1 to 8 carbon atoms and more preferably 1 to 4 carbon atoms, and specific examples thereof include an alkyl group such as a methyl group, an ethyl group, or an n-propyl group.

Specific examples of such a trialkoxysilyl group bonded to a silicon atom via a divalent hydrocarbon group which may have an oxygen atom include the following groups:

-(CH₂)₂-Si(OCH₃)₃;

-(CH₂)₃-Si(OCH₃)₃;

-(CH₂)₂-Si(OCH₂CH₃)₃; and

-(CH₂)₃-Si(OCH₂CH₃)₃.

The monovalent substituent bonded to a silicon atom other than the hydrogen atom (SiH group) directly bonded to a silicon atom, the perfluoroalkyl group or the perfluorooxyalkyl group, and the epoxy group or trialkoxysilyl group bonded to a silicon atom via a divalent hydrocarbon group which may have an oxygen atom, in the organopolysiloxane as the component (F), is a substituted or unsubstituted alkyl group or aryl group having 1 to 20 carbon atoms and preferably 1 to 12 carbon atoms, and examples thereof include an alkyl group such as a methyl group, an ethyl group, a propyl group, a butyl group, a hexyl group, a cyclohexyl group, an octyl group, or a decyl group, an aryl group such as a phenyl group, a tolyl group, or a naphthyl group, and a chloromethyl group, a chloropropyl group, and a cyanoethyl group, in which some or all hydrogen atoms of the above-described groups are substituted with halogen atoms such as chlorine atoms, cyano groups, or the like. Among these, a methyl group or an ethyl group is preferable.

A cyclic organopolysiloxane represented by General Formula (19) is preferable as the organopolysiloxane as the component (F).

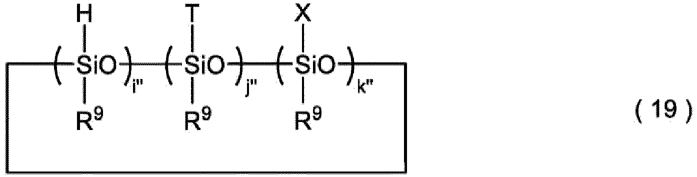

**In** the formula, i" represents an integer of 1 to 6 and preferably an integer of 1 to 5, j" represents an integer of 1 to 4 and preferably an integer of 1 to 3, k" represents an integer of 1 to 4 and preferably an integer of 1 to 3, and the sum of i" + j" + k" is in a range of 4 to 10 and preferably in a range of 4 to 8. Further, R⁹'s each independently represent a substituted or unsubstituted monovalent hydrocarbon group, T's each independently represent a perfluoroalkyl group or perfluorooxyalkyl group bonded to a silicon atom via a divalent hydrocarbon group which may have a silicon atom, an oxygen atom, and a nitrogen atom, X's each independently represent an epoxy group or trialkoxysilyl group bonded to a silicon atom via a divalent hydrocarbon group which may have an oxygen atom. Here, the order of bonding between -(SiO)(H)R⁹-, -(SiO)(T)R⁹-, and -(SiO)(X)R⁹- is not limited.

In Formula (19), R⁹'s each independently represent a substituted or unsubstituted monovalent hydrocarbon group, and examples thereof include the same groups as those for the monovalent substituent bonded to a silicon atom other than the hydrogen atom (SiH group) directly bonded to a silicon atom, the perfluoroalkyl group or the perfluorooxyalkyl group, and the epoxy group or trialkoxysilyl group bonded to a silicon atom via a divalent hydrocarbon group which may have an oxygen atom. Among these, a methyl group or an ethyl group is preferable.

In Formula (19), T's each independently represent a perfluoroalkyl group or perfluorooxyalkyl group bonded to a silicon atom via a divalent hydrocarbon group which may have a silicon atom, an oxygen atom, and a nitrogen atom, and examples of this perfluoroalkyl group or perfluorooxyalkylene group include groups represented by General Formulae (4) and (5). Further, examples of the divalent hydrocarbon group which may have a silicon atom, an oxygen atom, and a nitrogen atom include the alkylene group, the arylene group, the combinations thereof, and the groups in which one or two or more structures selected from the group consisting of an ether-bonded oxygen atom, an amide bond, a carbonyl bond, an ester bond, and a diorganosilylene group such as a dimethylsilylene group are interposed in the above-described groups.

In Formula (19), X's each independently represent an epoxy group or trialkoxysilyl group bonded to a silicon atom via a divalent hydrocarbon group which may have an oxygen atom, and examples thereof include groups the above-described groups represented by Formulae (16) to (18).

Examples of such a component (F) include the following compounds. Further, Me represents a methyl group, and Et represents an ethyl group.

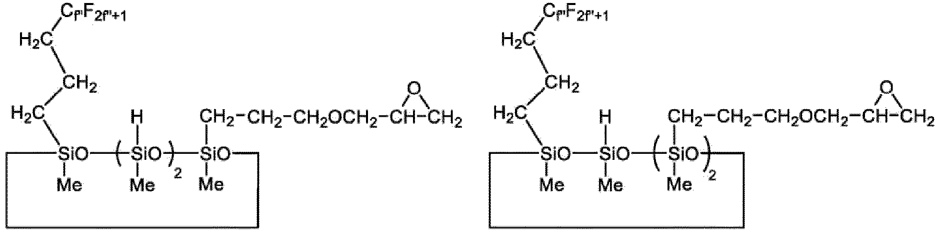

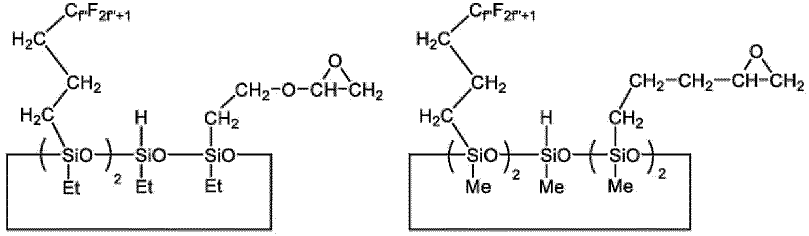

In the formulae, f" represents an integer of 1 to 10.

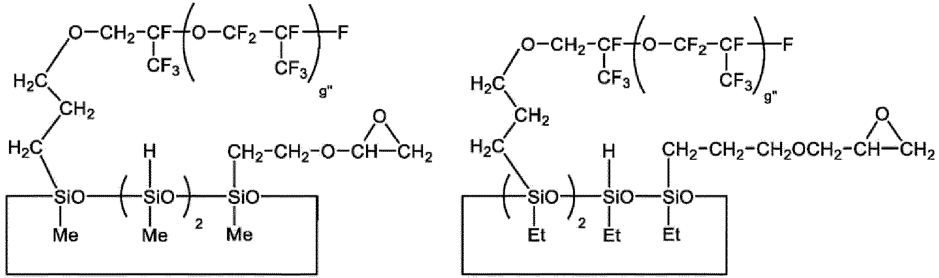

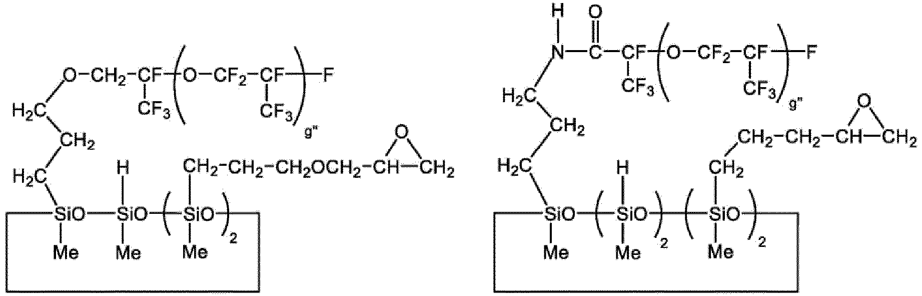

In the formulae, g" represents an integer of 1 to 50.

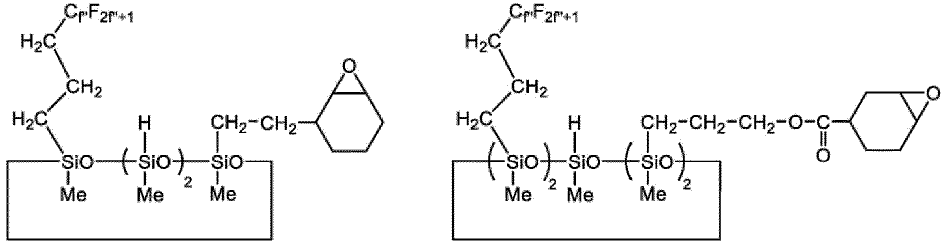

In the formulae, f" represents an integer of 1 to 10.

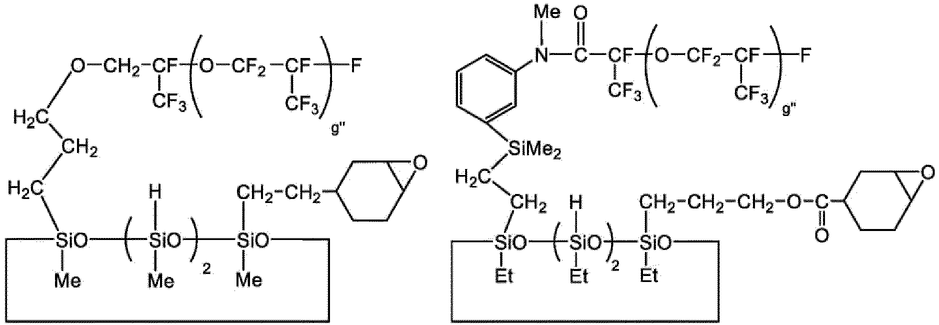

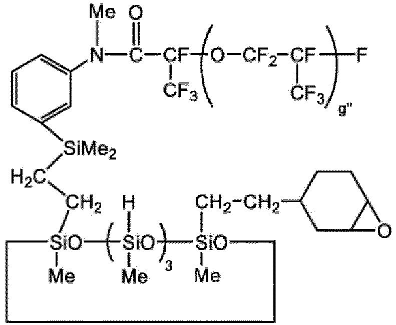

In the formulae, g" represents an integer of 1 to 50.

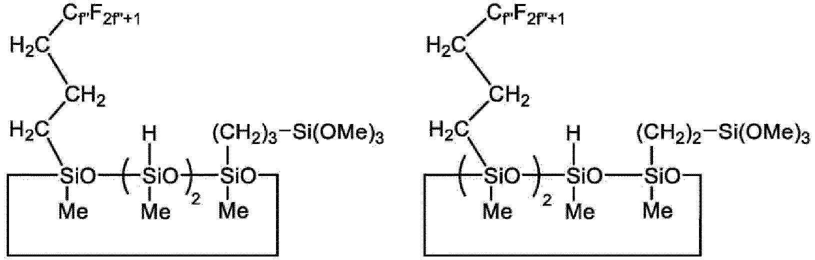

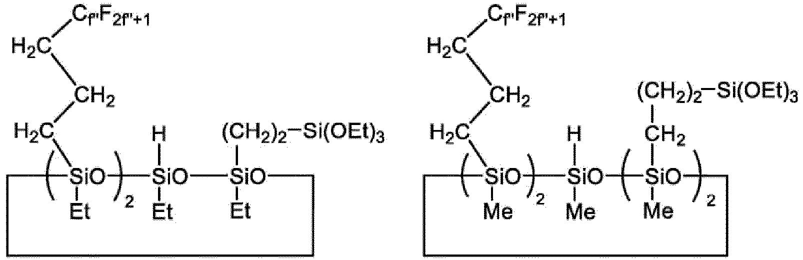

In the formulae, f" represents an integer of 1 to 10.

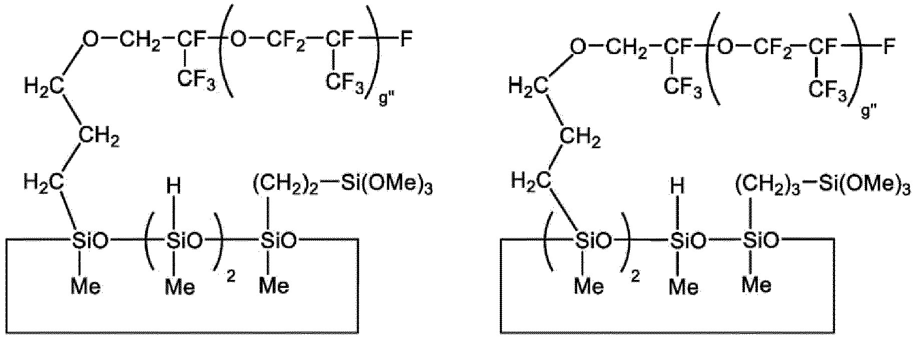

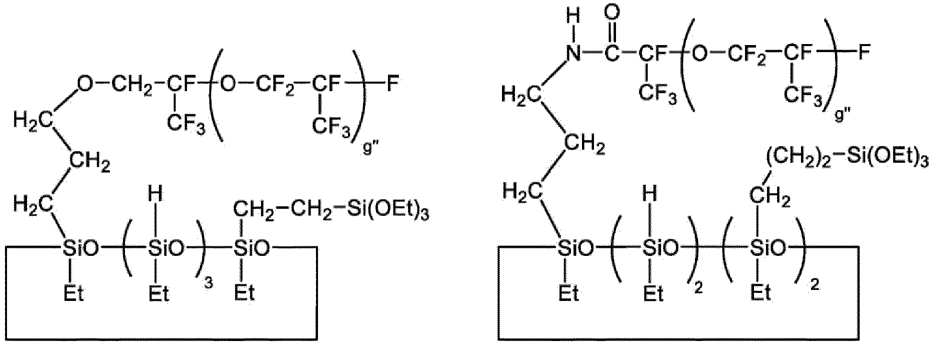

In the formulae, g" represents an integer of 1 to 50.

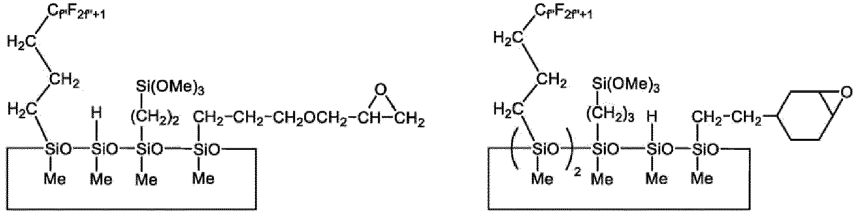

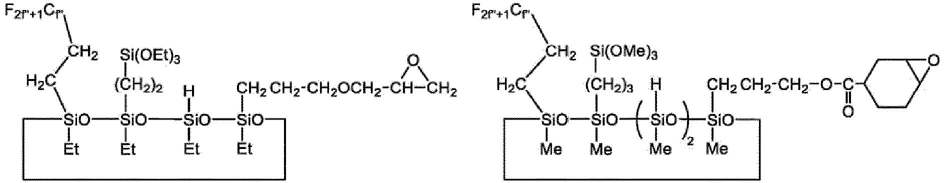

In the formulae, f" represents an integer of 1 to 10.

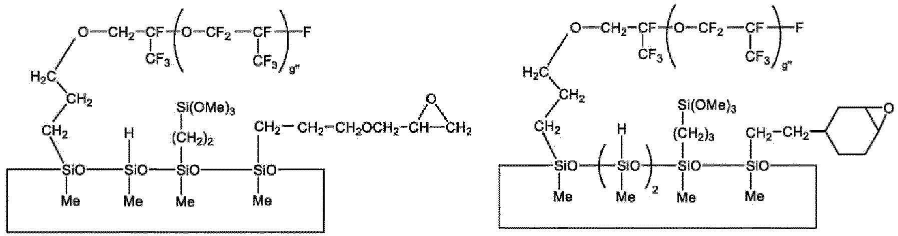

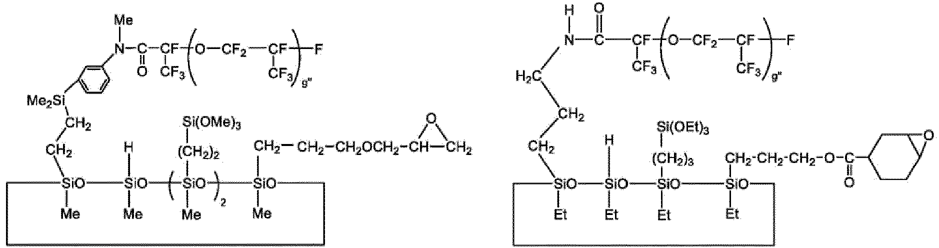

In the formulae, g" represents an integer of 1 to 50.

The component (F) may be used alone or in combination of two or more kinds thereof.

Further, in a case where the component (F) is blended into the composition, the amount of the component (F) to be blended is preferably in a range of 0.01 to 20 parts by mass, more preferably in a range of 0.01 to 10 parts by mass, and still more preferably in a range of 0.01 to 8 parts by mass with respect to 100 parts by mass of the components (A1) and (A2). When the amount of the component (F) to be blended is 0.01 parts by mass or greater , the adhesiveness can be sufficiently obtained. Further, when the amount thereof is 20 parts by mass or less, the physical strength of the cured product is enhanced.

### Other Components

The perfluoro(poly)ether compound-containing curable composition of the present invention may be blended with, as optional components, a plasticizer, a viscosity adjuster, a flexibility imparting agent, an inorganic pigment such as titanium oxide, iron oxide, carbon black, or cobalt aluminate, a heat resistance improver such as titanium oxide, iron oxide, carbon black, cerium oxide, cerium hydroxide, zinc carbonate, magnesium carbonate, or manganese carbonate, a thermal conductivity imparting agent such as alumina, boron nitride, silicon carbide, or metal powder, and a conductivity imparting agent such as silver powder, or conductive zinc oxide as necessary in addition to the components (A1) and (A2) and the components (B) to (F) in order to increase the practicality. The amount of these additives to be blended is optional within a range where the purpose of the present invention is not impaired.

As the plasticizer, the viscosity adjuster, and the flexibility imparting agent, a nonreactive (non-functional) linear perfluoro compound containing no functional groups (an alkenyl group and a hydrosilyl group) involved in the hydrosilylation addition reaction, which is represented by General Formulae (20) and (21), can be used.

F-(CF₂CF₂CF₂O)_{a'}-J (20)

In Formula (20), J represents a group represented by C_{b'}F_{2b'+1}- (b' represents an integer of 1 to 3), a' represents an integer of 1 to 500 and preferably an integer of 2 to 300.

J-O-{(CF(CF₃)CF₂O)_{c'}-(CF₂CF₂O)_{d'}-(CF₂O)_{e'}}-J (21)

In Formula (21), J has the same definition as described above, c' and d' each represent an integer of 0 to 300 and preferably an integer of 1 to 150, where c' and d' do not represent 0 at the same time. Further, e' represents an integer of 1 to 300 and preferably an integer of 1 to 150. The repeating units may be randomly bonded to each other.

Specific examples of the linear perfluoro compound represented by Formula (20) or (21) include the following compounds:

F-(CF₂CF₂CF₂O)_{a"}-CF₂CF₃

where a" represents an integer of 1 to 200;

   CF₃-O-{(CF(CF₃)CF₂O)_{c"}-(CF₂O)_{e"}}-CF₃
where c" represents an integer of 1 to 200, and e" represents an integer of 1 to 200, and the repeating units may be randomly bonded to each other; and

   CF₃-O-{(CF₂CF₂O)_{d"}-(CF₂O)_{e"}}-CF₃
where d" represents an integer of 1 to 200, and e" represents an integer of 1 to 200. The repeating units may be randomly bonded to each other.

The linear perfluoro compound represented by Formula (20) or (21) may be used alone or in combination of two or more kinds thereof.

The amount of these non-reactive (non-functional) linear perfluoro compounds is optional within a range where the purpose of the present invention is not impaired.

The perfluoro(poly)ether compound-containing curable composition of the present invention can be prepared by uniformly mixing predetermined amounts of the components (A1) and (A2), the components (B) to (E), and as necessary, the component (F) and the other components described above using a known method, but it is particularly preferable that the composition be prepared by the following method. First, predetermined amounts of the components (A1) and (A2) and the component (D) are kneaded using a machine such as a planetary mixer or a kneader. These components may be blended at room temperature, but may be heated in a temperature range where a polymer is not decomposed for the purpose of stabilizing the shear heat and desirably under conditions of 100°C to 300°C for 10 minutes to 8 hours. Next, the kneaded product is cooled to room temperature and further treated (kneaded) at room temperature (25°C ± 10°C) using a device such as a three-roll mill. Next, a predetermined amount of the component (C) is added to the obtained kneaded product, the mixture is kneaded at room temperature for 1 to 120 minutes using a machine such as a planetary mixer, predetermined amounts of the component (E) and the other optional components are added thereto as necessary, the mixture is kneaded at room temperature for 1 to 120 minutes, a predetermined amount of the component (B) is added thereto, and the mixture is kneaded at room temperature for 1 to 120 minutes, thereby preparing the perfluoro(poly)ether compound-containing curable composition.

The perfluoro(poly)ether compound-containing curable composition of the present invention can be molded by employing a known molding method, and for example, the most suitable method for the purpose can be appropriately selected from various molding methods such as injection molding, transfer molding, cast molding, compression molding, extrusion molding, and coating.

The perfluoro(poly)ether compound-containing curable composition of the present invention may be cured at room temperature (25°C ± 10°C), but can be cured by being heated at 50°C to 200°C in order to accelerate the reaction. Specifically, the composition is cured under conditions of 110°C to 190°C and preferably 120°C to 170°C for 0.1 to 40 minutes, more preferably 1 to 30 minutes, and particularly preferably 5 to 20 minutes. Further, the cured product (perfluoro(poly)ether rubber cured product) that has been cured under the above-described conditions may further be optionally subjected to secondary vulcanization (post curing) at 100°C to 230°C for 1 to 24 hours as necessary.

The perfluoro(poly)ether compound-containing curable composition of the present invention to be obtained as described above has excellent injection moldability, can provide a cured product (perfluoro(poly)ether rubber cured product) having excellent heat resistance, chemical resistance, solvent resistance, low-temperature properties, low gas permeability (oxygen gas, hydrogen gas, or the like), and the like, and is particularly suitable for molding using a liquid injection molding system (LIMS). For example, the composition can be used in various applications for automobiles, semiconductor manufacturing devices, printers, medical equipment, and the like.

Examples of articles produced by curing the perfluoro(poly)ether compound-containing curable composition of the present invention include diaphragms such as fuel regulator diaphragms, pulsation damper diaphragms, oil pressure switch diaphragms, and EGR diaphragms, valves such as canister valves and power control valves, O-rings such as O-rings for quick connectors and O-rings for injectors, sealing materials such as oil seals and cylinder head gaskets, rubber components for chemical plants, specifically, pump diaphragms, valves, O-rings, hoses, packings, and sealing materials such as oil seals and gaskets, rubber components for injection printers, rubber components for semiconductor manufacturing lines, specifically, sealing materials such as diaphragms, valves, O-rings, packings, and gaskets for equipment that comes into contact with chemicals, valves that require low friction and abrasion resistance, rubber components for analytical, physical, and chemical equipment, specifically, pump diaphragms, valves, and seal components (O-rings, packings, and the like), rubber components for medical equipment, specifically, pumps, valves, and joints, and tent membrane materials, sealants, molded components, extruded components, coating materials, copier roll materials, moisture-proof coating materials for electrical appliances, potting materials for sensors, sealing materials for fuel cells, and laminated rubber cloth.

### WORKING EXAMPLES

Hereinafter, the present invention will be described in detail with reference to examples and comparative examples, but the present invention is not limited to the following examples.

The components used in the examples and the comparative examples are shown below.

### Component (A1)

(A1-1): perfluoropolyether compound containing alkenyl groups at both terminals represented by following formula: 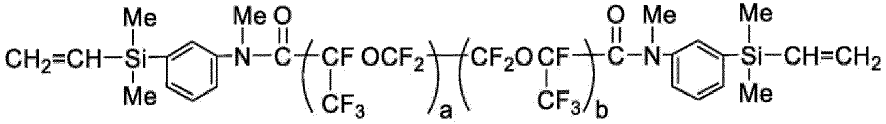 where a + b = 90, and the content of alkenyl groups is 0.0120 mol/100 g.

(A1-2): perfluoropolyether compound containing alkenyl groups at both terminals represented by following formula: 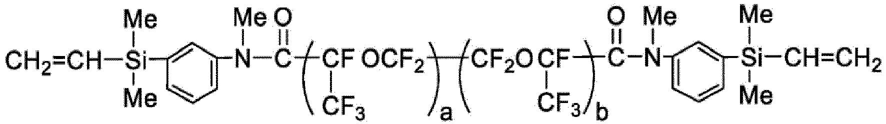 where a + b = 35, and the content of alkenyl groups is 0.0300 mol/100 g.

(A1-3): perfluoropolyether compound containing alkenyl groups at both terminals represented by following formula: 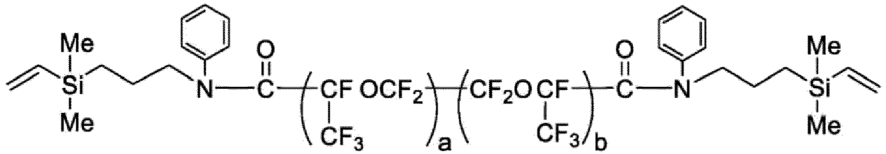 where a + b = 90, and the content of alkenyl groups: 0.0120 mol/100 g.

(A1-4): perfluoropolyether compound containing alkenyl groups at both terminals represented by following formula: 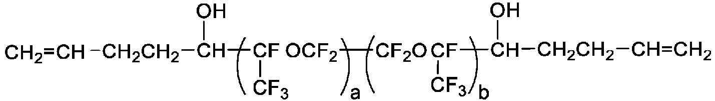 where a + b = 90, and the content of alkenyl groups is 0.0120 mol/100 g.

(A1-5): perfluoropolyether compound containing alkenyl groups at both terminals represented by following formula: 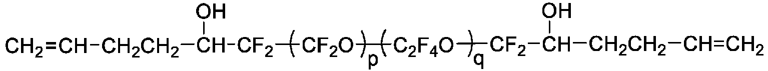 where p + q = 63, and the content of alkenyl groups: 0.0330 mol/100 g.

### Component (A2)

(A2-1): perfluoropolyether compound containing alkenyl group at one terminal represented by following formula: 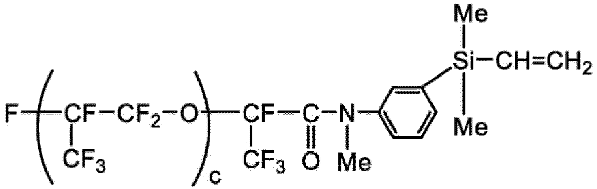 where c = 90, and the content of alkenyl group: 0.006 mol/100 g.

(A2-2): perfluoropolyether compound containing alkenyl group at one terminal represented by following formula: 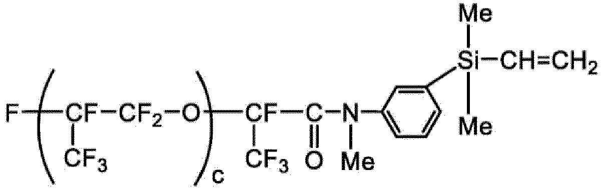 where c = 35, and the content of alkenyl group is 0.015 mol/100 g.

(A2-3): perfluoropolyether compound containing alkenyl group at one terminal represented by following formula: 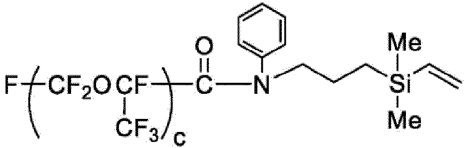 where c = 90, and the content of alkenyl group is 0.0060 mol/100 g.

(A2-4): perfluoropolyether compound containing alkenyl group at one terminal represented by following formula: 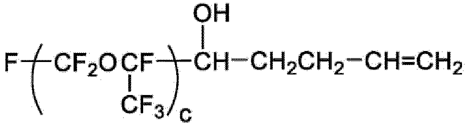 where c = 90, and the content of alkenyl group: 0.0060 mol/100 g.

(A2-5): perfluoropolyether compound containing alkenyl group at one terminal represented by following formula: 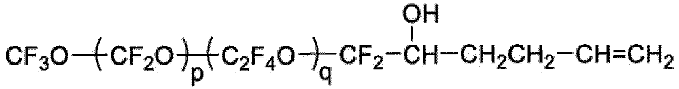 where p + q = 32, and the content of alkenyl group: 0.0165 mol/100 g.

### Component (B)

(B-1): compound represented by following formula: 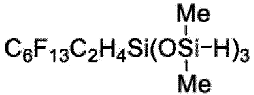 where the content of SiH group is 0.0050 mol/g.

### Component (C)

(C-1): platinum-divinyltetramethyldisiloxane complex in toluene solution (trade name: CAT-PL-50T, manufactured by Shin-Etsu Chemical Co., Ltd., content of platinum: 0.5% by mass)

### Component (D)

(D-1): R-8200 (manufactured by NIPPON AEROSIL CO., LTD., hydrophobic fumed silica having surface subjected to hydrophobic treatment with hexamethyldisilazane, BET specific surface area: about 160 m²/g, amount of carbon in surface (carbon content): about 2.0% to 4.0% by mass, bulk density: about 140 g/L)

### Component (E)

### (E-1): 1-ethynyl-1-cyclohexanol in 50% by mass toluene solution

In Working Examples 1 to 12 and Comparative Examples 1 to 4, each composition was prepared by the following procedures using predetermined amounts of components listed in Tables 1 and 2. Further, each cured product was prepared by molding and curing the composition by the method described below, and the following evaluations were performed.

Preparation of compositions in Working Examples 1 to 12 and Comparative Examples 1 to 4:
First, the predetermined amounts of the components (A1) and (A2) and the component (D) listed in Tables 1 and 2 were kneaded at 120°C for 1 hour using a planetary mixer. The kneaded product was cooled to room temperature and subjected to a three-roll mill treatment. The predetermined amount of the component (C) listed in Tables 1 and 2 was added to 130 parts by mass of the obtained kneaded product, the mixture was kneaded at room temperature for 10 minutes, the predetermined amount of the component (E) listed in Tables 1 and 2 was added thereto, and the mixture was kneaded at room temperature for 10 minutes. Further, the predetermined amount of the component (B) listed in Tables 1 and 2 was added thereto, and the mixture was kneaded at room temperature for 10 minutes, thereby obtaining a composition. Further, the component (B) was added to satisfy [SiH group in component (B)/alkenyl group in components (A1) and (A2)] = 1.2 (molar ratio).

### Preparation of cured products in Working Examples 1 to 12 and Comparative Examples 1 to 4

Each of the compositions described above was subj ected to press crosslinking (primary crosslinking) at 150°C for 10 minutes to mold a rubber sheet having a thickness of 2.0 mm. Further, the rubber sheet was subjected to oven crosslinking (secondary crosslinking) at 200°C for 4 hours, thereby preparing a cured product.

### Elongation at Break of Cured Product

A rubber cured product is attached to a rod or a spool in some cases usually in a state where the rubber cured product is stretched, but the rubber cured product may be broken or twisted when the rubber cured product has a low elongation at break (elongation properties), and as a result, attachment failure may occur in some cases. Accordingly, it is important for a cured product to have a high elongation at break.

The elongation at break of each of the cured products in Working Examples 1 to 12 and Comparative Examples 1 to 4 was measured in conformity with JIS K 6249, and evaluated according to the following criteria. The results are listed in Tables 1 and 2.

### Evaluation criteria

⊚⊚: The elongation at break was 400% or greater.
⊚: The elongation at break was 300% or greater and less than 400%.
∘: The elongation at break was 200% or greater and less than 300%.
△: The elongation at break was 100% or greater and less than 200%.
×: The elongation at break was less than 100%.
××: It was not possible to mold the cured product into a sheet shape.

### Liquid Injection Molding System (LIMS) Moldability

O-rings (size: 214) were molded under the injection molding conditions listed in Table 3 using an injection molding machine (10 ton LIMS molding machine NS-10, LIMS specification, manufactured by NISSEI PLASTIC INDUSTRIAL CO., LTD.) and a nine-cavity mold for an O-ring (AS568 standard, size: 214 (dimensions (thickness 3.53 mm × inner diameter 24.99 mm))) with reference to JP-A-2005-246958. The moldability of each composition was evaluated on a four-point scale. The LIMS moldability was evaluated based on two evaluation items, which are "injection moldability" during molding processing and "appearance of molded product" of the completed molded product, according to the evaluation criteria as listed in Table 4. The results thereof are listed in Tables 1 and 2.

**Table 1**

| Amount of composition blended (parts by mass) | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Component (A1) as compound containing at least one alkenyl group at each of both terminals of molecular chain and containing divalent perfluoro(poly)ether residue in main chain | A1-1 | 99.90 | - | 90.00 | 60.00 | 52.00 | 99.00 | 90.00 | 80.00 | - | - | - | - |
| | A1-2 | - | 99.90 | - | - | - | - | - | - | 80.00 | - | - | - |
| | A1-3 | - | - | - | - | - | - | - | - | - | 80.00 | - | - |
| | A1-4 | - | - | - | - | - | - | - | - | - | - | 80.00 | - |
| | A1-5 | - | - | - | - | - | - | - | - | - | - | - | 80.00 |
| Component (A2) as compound containing at least one alkenyl group at one terminal of molecular chain and containing divalent perfluoro(poly)ether residue in main chain | A2-1 | 0.10 | - | 10.00 | 40.00 | 48.00 | - | - | - | - | - | - | - |
| | A2-2 | - | 0.10 | - | - | - | 1.00 | 10.00 | 20.00 | 20.00 | - | - | - |
| | A2-3 | - | - | - | - | - | - | - | - | - | 20.00 | - | - |
| | A2-4 | - | - | - | - | - | - | - | - | - | - | 20.00 | - |
| | A2-5 | - | - | - | - | - | - | - | - | - | - | - | 20.00 |
| [(A2)]/[(A1) + (A2)] (% by mole) | | 0.10 | 0.10 | 10 | 40 | 48 | 2.46 | 22 | 38 | 20 | 20 | 20 | 20 |
| (B) | B-1 [SiH group in component (B)/alkenyl group in component (A)] | 1.20 | 1.20 | 1.20 | 1.20 | 1.20 | 1.20 | 1.20 | 1.20 | 1.20 | 1.20 | 1.20 | 1.20 |
| (C) | C-1 | 0.10 | 0.10 | 0.10 | 0.10 | 0.10 | 0.10 | 0.10 | 0.10 | 0.10 | 0.10 | 0.10 | 0.10 |
| (D) | D-1 | 30 | 30 | 30 | 30 | 30 | 30 | 30 | 30 | 30 | 30 | 30 | 30 |
| (E) | E-1 | 0.20 | 0.20 | 0.20 | 0.20 | 0.20 | 0.20 | 0.20 | 0.20 | 0.20 | 0.20 | 0.20 | 0.20 |
| Evaluation results | LIMS moldability | ○ | ⊚ | ○ | ○ | ○ | ⊚ | ○ | ○ | ⊚ | ○ | ○ | ○ |
| | Elongation at break | ○ | ○ | ⊚ | ⊚⊚ | ⊚⊚ | ○ | ⊚ | ⊚ | ⊚ | ⊚ | ⊚ | ⊚ |

**Table 2**

| Amount of composition blended (parts by mass) | | Comparative Example | | | |
|---|---|---|---|---|---|
| | | 1 | 2 | 3 | 4 |
| Component (A1) as compound containing at least one alkenyl group at each of both terminals of molecular chain and containing divalent perfluoro(poly)ether residue in main chain | A1-1 | 99.95 | 45.00 | 70.00 | - |
| | A1-2 | - | - | - | 48.00 |
| | A1-3 | - | - | - | - |
| | A1-4 | - | - | - | - |
| | A1-5 | - | - | - | - |
| Component (A2) as compound containing at least one alkenyl group at one terminal of molecular chain and containing divalent perfluoro(poly)ether residue in main chain | A2-1 | 0.05 | 55.00 | - | - |
| | A2-2 | - | - | 30.00 | 52.00 |
| | A2-3 | - | - | - | - |
| | A2-4 | - | - | - | - |
| | A2-5 | - | - | - | - |
| [(A2)]/[(A1) + (A2)] (% by mole) | | 0.05 | 55 | 52 | 52 |
| (B) | B-1 [SiH group in component (B)/alkenyl group in component (A)] | 1.20 | 1.20 | 1.20 | 1.20 |
| (C) | C-1 | 0.10 | 0.10 | 0.10 | 0.10 |
| (D) | D-1 | 30 | 30 | 30 | 30 |
| (E) | E-1 | 0.20 | 0.20 | 0.20 | 0.20 |
| Evaluation results | LIMS moldability | ○ | × | Δ | Δ |
| | Elongation at break | Δ | ×× | ×× | ×× |

**Table 3**

| | | |
|---|---|---|
| Amount of material supplied (mm) | | 6 |
| Molding temperature (°C) | Fixed | 190 |
| | Mobile | 190 |
| Injection pressure (%) | Primary pressure | 60 |
| | Secondary pressure | 20 |
| Injection speed (%) | Primary speed | 5 |
| | Secondary speed | 5 |
| Injection time (sec) | | 1.5 |
| Vulcanization time (sec) | | 30 |
| Decompression operation | | ON |
| Decompression degree (Pa) | | 0.1 |

**Table 4**

| Evaluation criteria | Injection moldability | Appearance of molded product |
|---|---|---|
| ⊚ | Flow failure and the like of composition under injection conditions listed in Table 3 were not observed | Poor appearance and the like were not observed |
| ○ | Flow failure and the like were not observed when injection conditions were adjusted | Poor appearance and the like were not observed |
| Δ | Flow failure and the like were not observed when injection conditions were adjusted | Mixing of small amount of air, damage to gate portion, and the like were found |
| × | Flow failure and the like were observed even when injection conditions were adjusted | Mixing of significant amount of air, damage to gate portion, and the like were found |

## Claims

1. A curable composition comprising:
a component (A1) which is a compound that contains at least one alkenyl group at each of both terminals of a molecular chain and contains a divalent perfluoro(poly)ether residue in a main chain;
a component (A2) which is a compound that contains at least one alkenyl group only at one terminal of a molecular chain and contains a perfluoro(poly)ether residue in a main chain, in which the curable composition contains the component (A2) in an amount as determined such that a total amount of the component (A2) is 0.10% by mole or greater and 50% by mole or less with respect to a total amount of the components (A1) and (A2);
a component (B) which is a fluorine-modified organic silicon compound that has two or more hydrogen atoms bonded to silicon atoms in one molecule;
a component (C) which is a hydrosilylation reaction catalyst; and
a component (D) which is a reinforcing filler.

2. The curable composition according to claim 1,
wherein the component (A1) is represented by General Formula (1) defined as
Rf¹[-U-Z(-Y-X)_{β}]₂ (1);
and
wherein the component (A2) is represented by General Formula (2) defined as
Rf²-U-Z(-Y-X)_{β} (2)
wherein, in the formulae, Rf¹ represents a divalent perfluoro(poly)ether residue, Rf² represents a monovalent perfluoro(poly)ether residue, U's each independently represent a single bond, a carbonyl bond, or a divalent organic group, Z's each independently represent a single bond, a nitrogen atom, a silicon atom, a carbon atom, a phosphorus atom, or a tri- to octavalent organic group, Y's each independently represent a single bond or a divalent organic group, X's each independently represent an alkenyl group, and β represents an integer of 1 to 7, where β represents 2 or greater in a case where Z does not represent a single bond, and U and Z do not represent a single bond at the same time.

3. The curable composition according to claim 1, wherein the total amount of the component (A2) is 0.50% by mole or greater and 40% by mole or less with respect to the total amount of the components (A1) and (A2).

4. The curable composition according to claim 1, wherein the total amount of the components (A1) and (A2) is 100 parts by mass, an amount of the component (B) is as determined such that an amount of the hydrogen atoms (SiH group) bonded to the silicon atoms in the component (B) is 0.5 to 5 moles with respect to 1 mole of the alkenyl group in the components (A1) and (A2), an amount of the component (C) is set to a catalyst amount, and an amount of the component (D) is 10 to 40 parts by mass.

5. The curable composition according to claim 1, further comprising a component (E) which is a hydrosilylation reaction control agent.

6. The curable composition according to claim 1, wherein the curable composition is used for a liquid injection molding system.

7. An article produced by curing the curable composition according to any one of claims 1 to 6.
